# EUROPÄISCHE PATENTSCHRIFT

(11) **EP 2 207 686 B1**
(45) Veröffentlichungstag und Bekanntmachung des Hinweises auf die Patenterteilung: **07.05.2014**
(21) Anmeldenummer: 08843750.4
(22) Anmeldetag: 31.10.2008
(51) Int. Cl.: B42D 25/00, B41M 3/14

(54) **VERFAHREN ZUR HERSTELLUNG EINES POLYMERSCHICHTVERBUNDS MIT MEHRLAGIGER PERSONALISIERUNG UND/ODER INDIVIDUALISIERUNG**
METHOD FOR PRODUCING A MULTILAYER POLYMER STRUCTURE HAVING A MULTILAYER PERSONALIZATION AND/OR INDIVIDUALIZATION FEATURE
PROCÉDÉ DE FABRICATION D'UN COMPOSITE POLYMÈRE STRATIFIÉ PRÉSENTANT UNE PERSONNALISATION ET/OU INDIVIDUALISATION MULTICOUCHE

(30) Priorität: 31.10.2007 DE 102007052947; 07.12.2007 DE 102007059747; 29.02.2008 DE 102008012424
(43) Veröffentlichungstag der Anmeldung: 21.07.2010
(60) Teilanmeldung: 13185058.8
(73) Patentinhaber: Bundesdruckerei GmbH, 10969 Berlin (DE); Bayer MaterialScience AG, 51368 Leverkusen (DE)
(72) Erfinder: MUTH, Oliver, 12277 Berlin (DE); PAESCHKE, Manfred, 16348 Wandlitz OT Basdorf (DE); MATHEA, Arthur, 14199 Berlin (DE); SPRINGMANN, Edward, 10249 Berlin (DE); LEOPOLD, André, 10119 Berlin (DE); HAGEMANN, Michael, 13465 Berlin (DE); FISCHER, Jörg, 13053 Berlin (DE); DRESSEL, Olaf, 14641 Wustermark (DE); PFLUGHOEFFT, Malte, 13347 Berlin (DE); PUDLEINER, Heinz, 47800 Krefeld (DE)
(74) Vertreter: Patentanwälte Bressel und Partner mbB
(86) Internationale Anmeldenummer: PCT/EP2008/009333
(87) Internationale Veröffentlichungsnummer: WO 2009/056351

(56) Entgegenhaltungen:
- EP-A- 0 086 282
- EP-A- 0 430 282
- EP-A- 1 493 786
- EP-A- 1 640 156
- WO-A-00/15430
- WO-A-01/53113
- WO-A-02/27647
- WO-A-2005/058608
- WO-A-2007/092324
- DE-A1- 19 832 570
- US-A1- 2004 191 521

## Beschreibung

Die Erfindung betrifft ein Verfahren zum Herstellen eines Polymerschichtverbunds aus mehreren Substratschichten, in dem mindestens eine erste personalisierende und/oder individualisierende Information drucktechnisch gespeichert ist, sowie einen solchen Polymerschichtverbund. Ebenso betrifft die Erfindung eine Verwendung eines solchen Verfahrens oder eines Polymerschichtverbundes bei der Herstellung eines Sicherheits- und/oder Wertdokuments und/oder eine Verwendung eines solchen Polymerschichtverbunds als Sicherheits- und/oder Wertdokument.

### Stand der Technik und Hintergrund der Erfindung

Moderne Sicherheits- und/oder Wertdokumente werden oder sind als Polymerschichtverbund ausgebildet oder aus einem solchen hergestellt oder umfassen einen solchen. Sicherheits- und/oder Wertdokumente umfassen in der Regel personalisierende und/oder individualisierende Informationen, die eine Zuordnung des Sicherheits- und/oder Wertdokuments zu einer Person und/oder einer Gruppe von Personen, Gegenständen und/oder Entitäten ermöglicht. Eine individualisierende Information ist kann beispielsweise eine Seriennummer oder eine Angabe der Ausstellungsbehörde umfassen. Die personalisierenden und/oder individualisierenden Informationen stellen darüber hinaus ein Sicherheitsmerkmal dar. Ein Sicherheitsmerkmal ist ein Merkmal eines Sicherheits- und/oder Wertdokuments, welches ein Kopieren und/oder Fälschen und/oder Nachahmen des Wert- und/oder Sicherheitsdokuments verhindern oder zumindest erschweren soll.

Als personalisierende Informationen werden solche angesehen, die einer Person zuordenbare Informationen umfassen. Dies können beispielsweise Bildinformationen, beispielsweise ein Passbild, ein Fingerabdruck usw., oder alphanumerische Zeichenfolgen, wie einen Namen, eine Adresse, einen Wohnort, ein Geburtsdatum usw., umfassen.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, Bankkarten, beliebige Chipkarten und Haftetiketten (z.B. zur Produktsicherung).

Aus dem Stand der Technik sind unterschiedliche Verfahren zur Herstellung von Wert- und/oder Sicherheitsdokumenten bekannt. Beispielsweise sind in den Druckschriften US 6,022,429, US 6,264,296, US 6,685,312, US 6,932,527, US 6,979,141 und US 7,037,013 solche Verfahren beschrieben, bei denen auf fertige Rohlinge ein Tintenstrahldruck aufgebracht wird, der mit einem Schutzlack oder einer Schutzfolie als Schutz vor mechanischen und/oder chemischen Beschädigungen sowie Manipulationen geschützt werden soll. Mit diesen Verfahren können personalisierende und/oder individualisierende Informationen farbig in dem Sicherheits- und/oder Wertdokument drucktechnisch gespeichert werden. Die sich ergebenden Sicherheits- und/oder Wertdokumente weisen jedoch nur eine relativ geringe Sicherheit gegen Manipulationen auf, weil die aufgedruckte Information vollständig relativ oberflächennah aufgedruckt ist und die Schutzschicht aus Lack oder einer Schutzfolie meist keine monolithische, stoffschlüssige Verbindung mit dem Kartenrohling ausbildet und somit ablösbar und/oder entfernbar ist. Eine anschließende Manipulation des Gedruckten ist möglich.

Aus der DE 41 34 539 A1 ist ein Aufzeichnungsträger mit farbigen Bildinformationen, der insbesondere eine Wert- oder Ausweiskarte ist, sowie ein Verfahren zur Herstellung bekannt. Die Bildinformation wird in einen Hell-/Dunkelanteil und einen Farbeinteil zerlegt. Der Hell-/Dunkelanteil, welcher für den visuellen Eindruck bestimmt ist, wird in hoch aufgelöster Form in den Aufzeichnungsträger eingebracht. Diesem Anteil wird die farbige Bildinformation kongruent überlagert, so dass ein integraler Gesamteindruck entsteht. Um die Fälschungssicherheit zu gewährleisten, wird einer der Anteile der Bildinformation weitgehend fälschungssicher in einen Kartenaufbau eingebracht. Beschrieben sind Ausführungsformen, bei denen beispielsweise die Hell-/Dunkelinformation mittels Lasergravur in eine transparente Folie eingebracht wird, die auf einem bedruckten Inlett aufgebracht ist. Auf eine auf die Folie aufgebrachte farbaufnehmende Schicht oder die transparente Folie wird der Farbanteil gedruckt. Bei einer anderen Ausführungsform wird das Inlett auf elektrofotografischem Wege mit den Farbanteilen der Bildinformation versehen. Über dem farbigen fixierten Tonerbild wird anschließend eine dünne transparente Deckfolie angeordnet, in die der Hell-/Dunkelanteil der Bildinformation mittels eines Laserstrahlschreibens (engl. Laserengraving) eingebrannt wird. Wieder eine weitere Ausführungsform sieht vor, dass das Inlett unter Verwendung eines herkömmlichen Verfahrens wie beispielsweise Inkjetdruck mit Schwarz/Weiß-Informationen versehen wird und im folgenden Schritt mit einer im Wesentlichen transparenten Kunststofffolie abgedeckt wird, die für eine Aufnahme von migrierenden Farben geeignet ist. Die farbigen Bildanteile werden mittels migrierender Farben in die Tiefe der Deckschicht eingebracht. Die Deckfolie kann hierbei zuerst mit der farbigen Bildinformation bedruckt werden. Unter Wärmeeinwirkung migriert die Farbe solange in das Innere der Deckschicht, bis durch UV-Strahlung eine Vernetzung der Deckschicht initiiert wird, die eine weitere Migration stoppt. Bei wieder einer anderen Ausführungsform wird die Farbinformation zunächst in die Deckschicht eingebracht und im Anschluss daran Hell-/Dunkelinformation mit herkömmlichen Druckmethoden aufgebracht. Erneut besteht das Problem, dass die verwendete Folie, unter der oder in der ein Teil der Informationen angeordnet sind, keine monolithische Verbindung mit dem Inlett ausbildet und daher für eine Fälschung entfernt und/oder ersetzt werden kann. Bei einer Reihe der beschriebenen Ausführungsformen ist darüber hinaus ein Teil der Informationen direkt an der Oberfläche aufgebracht und einer Fälschung und/oder Manipulation besonders leicht zugänglich.

Die Druckschriften US 7,005,003 B2, EP 0 131 145 B1, US 5,734,800 und US 6,765,693 B1 beschreiben Verfahren zum Drucken farbiger Bilder mit unterschiedlichen Farbauszügen..

Die Druckschrift WO 2005/058608 A1 offenbart ein Verfahren zum Herstellen eines mehrlagigen Sicherheitsartikels mittels eines Thermodruck-Verfahrens.

### Technisches Problem der Erfindung

Der Erfindung liegt das technische Problem zugrunde, ein Verfahren zum Herstellen eines Polymerschichtverbundes sowie einen solchen Polymerschichtverbund zu schaffen, in dem mindestens eine erste personalisierende und/oder individualisierende Information drucktechnisch gespeichert ist oder wird, so dass die erste personalisierende und/oder individualisierende Information gegenüber einer Manipulation und/oder Verfälschung und/oder ein solcher Polymerverbund gegen eine Nachahmung besser geschützt sind als bei den aus dem Stand der Technik bekannten Polymerschichtverbundsystemen, und die somit insbesondere als Wert- und/oder Sicherheitsdokument bzw. als Bestandteil eines Wert- und/oder Sicherheitsdokuments bzw. als Teil eines Herstellungsverfahrens eines solchen Wert und/oder Sicherheitsdokuments verwendet werden können.

### Grundzüge der Erfindung und bevorzugte Ausführungsformen

Zur Lösung des Problems wird ein Verfahren zum Herstellen eines Polymerschichtverbunds aus mehreren Substratschichten, in denen mindestens eine erste personalisierende und/oder individualisierende Information drucktechnisch gespeichert ist, vorgeschlagen, welches die Schritte umfasst: Bereitstellen von mehreren Polymerschichten als die Substratschichten, Drucken der ersten personalisierenden und/oder individualisierenden Information auf mindestens eine Substratschicht, Zusammentragen der Substratschichten zu einem Substratschichtenstapel und Laminieren der Substratschichten zu einem Polymerschichtverbund, wobei erfindungsgemäß vorgesehen ist, dass die erste personalisierende und/oder individualisierende Information in mindestens zwei Druckauszüge zerlegt wird, die jeweils eine Teilinformation der ersten personalisierenden und/oder individualisierenden Information umfassen und das Drucken der ersten personalisierenden und/oder individualisierenden Information erfolgt, in dem die mindestens zwei Druckauszüge auf mindestens zwei unterschiedliche Substratschichtoberflächen abgestimmt gedruckt werden, so dass die gedruckten Druckauszüge in dem Polymerschichtverbund passergenau übereinander liegen und gemeinsam die erste personalisierende und/oder individualisierende Information wiedergeben, wobei die Substratschichten so zusammengetragen werden, dass die mit den mindestens zwei Druckauszügen bedruckten Substratschichtoberflächen innen liegende Oberflächen in dem Substratschichtenstapel sind. Man erhält somit erfindungsgemäß einen Polymerschichtverbund, der durch Lamination mehrerer Substratschichten hergestellt ist und in dem mindestens eine erste personalisierende und/oder individualisierende Information drucktechnisch gespeichert ist, wobei die Substratschichten Polymerschichten sind und wobei die erste personalisierende und/oder individualisierende Information in mindestens zwei Druckauszüge zerlegt ist, die jeweils eine Teilinformation der ersten personalisierenden und/oder individualisierenden Information umfassen, und die mindestens zwei Druckauszüge in mindestens zwei voneinander beabstandeten Ebenen so gedruckt sind bzw. die mindestens zwei gedruckten Druckauszüge in mindestens zwei voneinander beabstandeten Ebenen so angeordnet sind, dass die gedruckten Druckauszüge in dem Polymerschichtverbund passergenau übereinander liegen und gemeinsam die erste personalisierende und/oder individualisierende Information wiedergeben, wobei die Ebenen, die mit den mindestens zwei Druckauszügen bedruckt sind bzw. in denen die mindestens zwei Druckauszüge angeordnet sind, innen liegende Ebenen sind. Der erhaltene Polymerschichtverbund umfasst somit in einem Verbundkörper eingearbeitet eine erste personalisierende Information, die in mindestens zwei voneinander beabstandeten Ebenen so gespeichert ist, dass diese gemeinsam die erste personalisierende Information wiedergeben. Gegenüber dem Aufbringen einer ersten individualisierenden und/oder personalisierenden Information im Innern eines Polymerschichtverbunds nach dem Stand der Technik wird hier eine erhöhte Fälschungssicherheit erreicht, da mindestens in zwei Ebenen Informationsanteile manipuliert werden müssen.

Die erste personalisierende und/oder individualisierende Information ist vorzugsweise bunt oder mehrfarbig ausgestaltet. Dies bedeutet, dass sich die erste personalisierende Information nicht mit einer einzigen Druckfarbe wiedergeben lässt. Als mehrfarbig wird eine Information angesehen, wenn sie mindestens zwei Farbeindrücke bei einem Betrachter hervorruft, wobei Helligkeitsunterschiede keine unterschiedlichen Farbeindrücke darstellen sollen. Als bunt wird eine Information angesehen, die mehr als drei verschiedene Farbeindrücke hervorruft, von denen vorzugsweise mindestens ein Farbeindruck durch additive Farbmischung (bei lumineszierenden Farben) bzw. subtraktive Farbmischung aus Grundfarben (bei sogenannte Körperfarben), die einen Farbraum aufspannen, hervorgerufen wird oder hervorgerufen werden kann. Schwarz und Graustufen werden hierbei nicht als Farben angesehen. Besonders bevorzugt umfasst die erste personalisierende und/oder individualisierende Information ein buntes oder mehrfarbiges Gesichtsbild einer Person. Eine Manipulationssicherheit wird dadurch gesteigert, dass die mindestens zwei Druckauszüge jeweils farbig sind. Hierbei können diese monochrom, d.h. einfarbig, und/oder mehrfarbig sein. Bei einer bevorzugten Ausführungsform umfassen die mindestens zwei Druckauszüge einen monochromen Farbauszug eines n-Farben-Farbsystems, insbesondere eines Dreifarbenfarbsystems, oder eines n-Farben-Schwarz-Farbsystems, insbesondere eines Drei-Farben-Schwarz-Farbsystems. Hierbei bieten sich alle bekannten n-Farben-Farbsysteme an, mit denen bunte oder mehrfarbige Informationen darstellbar sind, wobei die bunten Informationen mehr Farbwerte umfassen als Druckfarben zur Herstellung verwendet werden. Mit einem Drei-Farben-Farbsystem, beispielsweise mit den Farben Gelb, Magenta, Cyan, lässt sich ein Großteil des menschlich wahrnehmbaren Farbraums durch Ausnutzen der Farbsubtraktion bei der menschlichen Wahrnehmung von Farben erstellen. Ebenso können jedoch auch Farbsysteme verwendet werden, die mehr als drei Farben bzw. mehr als drei Farben und Schwarz, beispielsweise sechs Farben plus Schwarz verwenden.

Bei einer Ausführungsform der Erfindung umfassen die mindestens zwei Druckauszüge m monochrome Farbauszüge, die jeweils auf verschiedene Substratschichtoberflächen gedruckt werden. m ist hierbei eine ganze Zahl, die in der Regel mit einer Zahl n übereinstimmen wird, die die Anzahl der Farben des verwendeten Farbsystems angibt. Ebenso ist es jedoch denkbar, dass die erste personalisierende und/oder individualisierende Information in eine größere Anzahl von monochromen Druckauszügen zerlegt wird, so dass für einzelne oder alle Farben des Farbsystems zwei monochrome Druckauszüge existieren, die jeweils eine Teilinformation der ersten personalisierenden und/oder individualisierenden Information umfassen. Diese mehreren monochromen Druckauszüge für eine Farbe können selbstverständlich unterschiedliche Teilinformationen der ersten personalisierenden und/oder individualisierenden Information umfassen.

Eine passergenaue Ausrichtung von zwei der mindestens zwei Druckauszüge ist bei einer Ausführungsform besonders leicht zu realisieren, bei der zwei der oder die mindestens zwei Druckauszüge auf gegenüberliegende Oberflächen derselben Substratschicht passergenau gedruckt werden, wobei die gedruckten Druckauszüge zueinander bei Betrachtung der Oberflächen spiegelverkehrt sind. Dies bedeutet, dass der eine Druckauszug, der auf eine Oberseite der Substratschicht gedruckt wird, die der Oberseite im Substratstapel zugewandt ist, von der aus die individualisierende und/oder personalisierende erste Information wahrnehmbar sein soll, nicht gespiegelt aufgedruckt ist. Auf eine Unterseite derselben Substratschicht wird dann der Druckauszug spiegelverkehrt aufdruckt, wenn man die Substratschicht nun von der Unterseite aus betrachtet. Von der Oberseite aus betrachtet ergänzen sich die mindestens zwei Druckauszüge korrekt zu der personalisierenden und/oder individualisierenden ersten Information.

Um die erste personalisierende und/oder individualisierende Information korrekt wahrnehmen zu können, versteht es sich, dass die Substratschichten, die zwischen den einzelnen Druckauszügen und darüber angeordnet sind, transparent oder, falls sie nicht transparent sind, zumindest transluzent ausgebildet sind. Vorzugsweise sind alle diese Substratschichten transparent.

Ist die Substratschicht oder mindestens eine der Substratschichten zwischen den mindestens zwei Substratschichtoberflächen auf die die mindestens zwei Druckauszüge, die jeweils eine Teilinformation der ersten individualisierenden und/oder personalisierenden Information umfassen, aufgedruckt sind, transluzent, so ist es besonders bevorzugt, wenn der gesamte Polymerschichtverbund, zumindest in dem Bereich, in dem die erste individualisierende und/oder personalisierende Information gespeichert ist, transluzent, also nicht opak ist. Auf diese Weise lässt sich ein personalisierter und/oder individualisierter Durchsichtpasser erzeugen, der bei Betrachtung im Gegenlicht die Gesamtinformation darstellt.

Es ist somit bei einer Ausführungsform vorgesehen, dass die Polymerschichten alle, zumindest in einem Bereich, in dem eine der Substratschichtoberflächen mit einem der Druckauszüge bedruckt wird, oder zumindest in einem Bereich, in dem eine der in dem Polymerschichtverbund darüber oder darunter angeordneten Substratschichten mit einem der Druckauszüge bedruckt ist oder wird, als transparente und/oder transluzente Polymerschichten bereitgestellt werden, wobei zumindest eine, vorzugsweise genau eine, Polymerschicht, die zwischen zwei der mindestens zwei Druckauszüge angeordnet ist als transluzente Polymerschicht bereitgestellt wird. Die übrigen Polymerschichten sind vorzugsweise alle transparent.

Bei einer anderen Ausführungsform ist vorgesehen, dass mindestens zwei der mindestens zwei Druckauszüge auf Substratschichtoberflächen unterschiedlicher Substratschichten bedruckt werden.

Die Substratschichten werden vorzugsweise beim Zusammentragen zueinander so ausgerichtet, dass die mindestens zwei Druckauszüge in dem Substratschichtenstapel passergenau übereinander angeordnet sind. Dieses setzt voraus, dass die Substratschichten im Wesentlichen aus demselben Polymer gebildet sind oder zumindest dieselben Ausdehnungs- und/oder Schrumpfungseigenschaften beim stoffschlüssigen Verbinden der einzelnen Substratschichten beim Laminieren aufweisen.

Grundsätzlich sind als Werkstoffe für die Polymerschichten alle im Bereich der Sicherheits- und/oder Wertdokumente üblichen Werkstoffe einsetzbar. Die Polymerschichten können, gleich oder verschieden, auf Basis eines Polymerwerkstoffes aus der Gruppe umfassend PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), ABS (Acrylnitirl-Butadien-Styrol), PVC (Polyvinylchlorid) und Copolymeren solcher Polymere gebildet sein. Bevorzugt ist der Einsatz von PC-Werkstoffen, wobei beispielsweise, aber keinesfalls notwendigerweise, auch so genannte Nieder-T_{g}-Werkstoffe einsetzbar sind, insbesondere für die Polymerschichten, auf welche die Druckauszüge aufgedruckt sind, und/oder für die Polymerschichten, welche mit der oder den Polymerschichten, die bedruckt sind, verbunden sind, und zwar auf der Seite mit der Tintenstrahlbedruckung. Nieder-T_{g}-Werkstoffe sind Polymere, deren Glastemperatur unterhalb von 140 °C liegt.

Die Polymerschichten können gefüllt oder ungefüllt eingesetzt werden. Die gefüllten Polymerschichten enthalten insbesondere Farbmittel, welches sowohl Farbstoffe als auch Farbpigmente sein können, oder andere Füllstoffe. Die Polymerschichten können auch mittels Farbstoffe gefärbt oder farblos sein und in letzterem Falle transparent oder transluzent.

Bevorzugt ist es dabei, wenn das Grundpolymer zumindest einer der zu verbindenden Polymerschichten gleiche oder verschiedene miteinander reaktive Gruppen enthält, wobei bei einer Laminiertemperatur von weniger als 200°C reaktive Gruppen einer ersten Polymerschicht miteinander und/oder mit reaktiven Gruppen einer zweiten Polymerschicht reagieren. Dadurch kann die Laminiertemperatur herabgesetzt werden, ohne dass dadurch der innige Verbund der laminierten Schichten gefährdet wird. Dies liegt im Falle verschiedener Polymerschichten mit reaktiven Gruppen daran, dass die verschiedenen Polymerschichten auf Grund der Reaktion der jeweiligen reaktiven Gruppen miteinander und der Ausbildung von kovalenten chemischen Bindungen nicht mehr ohne weiteres delaminiert werden können. Denn es findet zwischen den Polymerschichten eine reaktive Kopplung statt, gleichsam ein reaktives Laminieren. Des Weiteren wird ermöglicht, dass wegen der niedrigeren Laminiertemperatur eine Veränderung der farbigen Druckfarbe, insbesondere eine Farbveränderung, verhindert wird. Bevorzugt ist es dabei, wenn die Glastemperatur T_{g} der zumindest einen Polymerschicht vor der thermischen Laminierung weniger als 140 °C (oder auch weniger als 120 °C oder weniger als 100 °C) beträgt, wobei die Glastemperatur dieser Polymerschicht nach der thermischen Laminierung durch Reaktion reaktiver Gruppen des Grundpolymers der Polymerschicht miteinander um zumindest 5 °C, vorzugsweise zumindest 20 °C, höher als die Glastemperatur vor der thermischen Laminierung ist. Hierbei erfolgt nicht nur eine reaktive Kopplung der miteinander zu laminierenden Schichten, vielmehr erfolgt eine Erhöhung des Molekulargewichts und somit der Glastemperatur durch Vernetzung des Polymers innerhalb der Schicht und zwischen den Schichten. Dies erschwert ein Delaminieren, ein Aufspalten, zusätzlich, insbesondere da bei einem Manipulationsversuch die hohen notwendigen Delaminationstemperaturen z.B. die Farben irreversibel beschädigen können und so das Dokument zerstört wird. Vorzugsweise beträgt die Laminiertemperatur beim Einsatz solcher Polymerwerkstoffe weniger als 180 °C, besser noch weniger als 150 °C. Die Auswahl der geeigneten reaktiven Gruppen ist für einen Fachmann auf dem Gebiet der Polymerchemie ohne Probleme möglich. Beispielhafte reaktive Gruppen sind ausgewählt aus der Gruppe umfassend -CN, -OCN, -NCO, -NC, -SH, -Sₓ, -Tos, -SCN, - NCS, -H, Epoxy (-CHOCH₂), -NH₂, -NN⁺, -NN-R, -OH, -COOH, -CHO, -COOR, -Hal (-F, - CI, -Br, -I), -Me-Hal (Me = zumindest zweiwertiges Metall, beispielsweise Mg), -Si(OR)₃, - SiHal₃, -CH=CH₂, und -COR, wobei R eine beliebige reaktive oder nicht-reaktive Gruppe sein kann, beispielsweise -H, -Hal, C₁-C₂₀-Alkyl, C₃-C₂₀-Aryl, C₄-C₂₀-ArAlkyl, jeweils verzweigt oder linear, gesättigt oder ungesättigt, optional substituiert, oder korrespondierende Heterocyklen mit einem oder mehreren gleichen oder verschiedenen Heteroatomen N, O, oder S. Andere reaktive Gruppen sind selbstverständlich möglich. Hierzu gehören die Reaktionspartner der Diels-Alder Reaktion oder einer Metathese. Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokuments reduziert wird. Solche elastizitätsvermittelnde Spacergruppen sind dem Fachmann bekannt und brauchen daher hier nicht weiter beschrieben zu werden. Lediglich beispielhaft seien Spacergruppen genannt, welche ausgewählt sind aus der Gruppe umfassend -(CH₂)ₙ-, - (CH₂-CH₂-O)ₙ-, -(SiR₂-O)ₙ-, -(C₆H₄)ₙ-, -(C₆H₁₀)ₙ-, C₁-Cₙ-Alkyl, C₃-C₍ₙ₊₃₎-Aryl, C₄-C₍ₙ₊₄₎-ArAlkyl, jeweils verzweigt oder linear, gesättigt oder ungesättigt, optional substituiert, oder korrespondierende Heterocyklen mit einem oder mehreren , gleichen oder verschiedenen Heteroatomen O, N, oder S, wobei n=1 bis 20, vorzugsweise 1 bis 10. Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2006, verwiesen. Der Begriff des Grundpolymers bezeichnet im Rahmen der vorstehenden Ausführungen eine Polymerstruktur, welche keine unter den eingesetzten Laminierbedingungen reaktiven Gruppen trägt. Es kann sich dabei um Homopolymere oder Copolymere handeln. Es sind auch gegenüber den genannten Polymere modifizierte Polymere umfasst.

Vorteilhaft ist es, wenn als Polymerschichten zumindest teilweise Polycarbonat (PC)-Schichten bereitgestellt werden, vorzugsweise nur PC-Schichten.
Polymerschichtverbundsysteme, die personalisierende und/oder individualisierende Informationen umfassen, insbesondere monolithische Polymerschichtverbundsysteme, die aus Polymerschichten eines Kunststoffmaterials (eines Polymers) hergestellt werden oder sind, können sehr gut als Sicherheits- und/oder Wertdokumente verwendet werden. Eine bevorzugte Ausführungsform sieht daher vor, dass der Polymerschichtverbund als Sicherheitsdokument oder Wertdokument ausgebildet wird.

Bei einer Ausführungsform ist daher vorgesehen, dass weitere, einschlägig bekannte Sicherheitselemente und/oder Sicherheitsmerkmale auf und/oder in die Substratschichten aufgebracht und/oder eingebracht werden. Selbstverständlich können Sicherheitselemente und/oder Sicherheitsmerkmale auch zwischen die Substratschichten in dem Substratschichtenstapel vor dem Laminieren eingebracht werden. Ebenso ist ein Auf- oder Einbringen in den fertig laminierten Polymerschichtenverbund, beispielsweise über Lasergravur usw., möglich.

Ferner ist es möglich, dass zusätzlich in den Polymerschichtenstapel vor dem Laminieren ein oder mehrere nicht aus polymerischen Werkstoffen, insbesondere Papier, bestehende weitere Substratschichten eingefügt werden, die so beschaffen ist oder sind, dass sie nach dem Laminieren nicht mehr zerstörungsfrei von angrenzenden Substratschichten und/oder weiteren angrenzenden Substratschichten gelöst werden kann oder können. Um Papierschichten in einen Polymerschichtverbund in angegebener Weise einbetten zu können, ist es beispielsweise vorteilhaft, die weitere Substratschicht auf Papierbasis mit Durchbrüchen und/oder Aussparungen zu versehen, durch die hindurch beim Laminieren an die auf Papierbasis ausgebildete weitere Substratschicht angrenzende polymersiche Substratschichten hindurch miteinander eine Verbindung ausbilden können.

Als weitere Sicherheitselemente und/oder Sicherheitsmerkmale seien beispielhaft eingebrachte diffraktive Strukturen, Hologramme, Prägungen, ein Vorsehen spezieller Druckelemente wie Guillochen oder Irisdruck usw. eine Verwendung bestimmter Farben ein Einbringen von Lasergravuren usw. erwähnt. Es ergibt sich für den Fachmann, dass alle im Stand der Technik bekannten Sicherheitsmerkmale zusätzlich genutzt werden können.

Als weiteres Sicherheitselement können in den Polymerschichtverbund eine oder mehrere elektronische Schaltungen und/oder ein Mikrochip eingebracht werden. Die elektronische Schaltung kann hierbei ein diskretes Bauelement, wie eine Induktivität, eine Kapazität, ein elektrischer Widerstand, eine Diode, ein Transistor, ein Speicherelement, ein Anzeigeelement oder eine Kombination bzw. eine Zusammenschaltung von mehreren dieser Komponenten sein, die einen Oszillator, einen Verstärker, einen Mikrokontroller oder ein Display ergeben. Ein Aufbau als integrierte Schaltung erweist sich als vorteilhaft. Diese elektronischen Schaltungen und/oder Mikrochips sind häufig so ausgebildet, dass diese kontaktlos ausgelesen und/oder beschrieben werden können. Um ein Austauschen oder Manipulieren einer der elektronischen Schaltungen und/oder des Mikrochips zu verhindern und abzusichern, ist bei einer Ausführungsform vorgesehen, auf eine erste Oberfläche einer als Inlayschicht bezeichneten Substratschicht oder in eine oder mehrere Aussparungen der Inlayschicht eine oder mehrere elektronische Schaltungen und/oder einen Mikrochip aufzubringen oder einzubringen und auf diese erste Oberfläche anschließend einen der mindestens zwei Druckauszüge aufzudrucken. Jedes Austauschen und/oder Entfernen des Mikrochips und/oder der einen oder der mehreren elektronischen Schaltungen bewirkt in einem solchen Falle auch eine Veränderung der ersten personalisierenden und/oder individualisierenden Information und ist somit einfach für einen Betrachter wahrzunehmen.

Eine weitere Ausführungsform sieht vor, dass ein transparentes oder transluzentes diffraktives Sicherheitselement zumindest teilweise beim Drucken eines der Druckauszüge direkt bedruckt wird. Eine Weiterbildung sieht vor, dass das diffraktive Sicherheitselement, beispielsweise ein Hologramm, auf eine Substratschicht aufgebracht wird, die bereits mit einem der Druckauszüge bedruckt ist und anschließend mit einem weiteren der Druckauszüge zumindest teilweise direkt überdruckt wird. Das diffraktive Sicherheitselement wird so optimal gegen ein Austauschen im Rahmen einer Manipulation eines Sicherheitsdokuments geschützt. Das Einbringen eines diffraktiven Elementes kann somit vor und/oder nach und/oder zwischen dem Bedrucken einer oder mehrerer der Substratschichtoberflächen erfolgen. Das diffraktive Element wird somit durch ein zumindest teilweises flächiges Angrenzen, welches eine direkte Bedruckung umfasst, an mindestens eine der mindestens zwei Druckauszüge gegen ein unbemerktes Austauschen im Zuge einer Manipulation geschützt.

Neben der ersten individualisierenden und/oder personalisierenden Information ist es bei einigen Ausführungsformen vorgesehen, dass mindestens eine zweite personalisierende und/oder individualisierende Information in den Polymerschichtverbund bzw. das Wert- und/oder Sicherheitsdokument eingebracht wird. Hierfür ist bei einer Ausführungsform vorgesehen, dass eine zweite personalisierende und/oder individualisierende Information in mehrere weitere Druckauszüge zerlegt wird und die mehreren weiteren Druckauszüge auf mehrere Substratschichtoberflächen der mehreren Substratschichten so aufgedruckt werden und die Substratschichten so zu dem Substratschichtenstapel zusammengetragen werden, dass die personalisierenden und/oder individualisierenden Informationen auf einer Oberseite des Polymerschichtverbunds wiedergegeben werden und die weiteren Druckauszüge in dem Polymerverbund passergenau übereinander liegen und gemeinsam die zweiten personalisierenden und/oder individualisierenden Informationen auf einer zu der Oberseite gegenüberliegenden Unterseite des Polymerschichtverbunds wiedergeben.

Das Aufbringen der ersten personalisierten Information kann im Einfachnutzen oder im Mehrfachnutzen, insbesondere im Zweifachnutzen, auf in Rollen bereitgestellten Polymerschichten oder auf in Bögen bereitgestellten Polymerschichten erfolgen. Eine Ausrichtung der einzelnen Substratschichten kann durch optische Kontrollverfahren überwacht werden. Ebenso ist eine Verwendung von mechanischen Anlagemarken, insbesondere bei einem Zusammentragen der Substratschichten in Form von Substratbögen, einsetzbar.

Bei einer Ausführungsform der Erfindung ist vorgesehen, dass auf die mehreren Substratschichten mehrere erste personalisierende Informationen und/oder individualisierende Informationen aufgedruckt werden und aus dem Polymerverbund mehrere Sicherheits- und/oder Wertdokumente herausgeteilt werden, vorzugsweise indem sie ausgeschnitten oder ausgestanzt werden.

Ein Bedrucken der Substratschichtoberflächen mit den verschiedenen Druckauszügen erfolgt mittels digitaler Druckverfahren. Insbesondere werden die mindestens zwei Druckauszüge mittels eines Transferdruckverfahrens oder eines Sublimationsdruckverfahrens oder eines Diffusions-Transferverfahrens oder eines Re-Transferverfahrens oder besonders bevorzugt eines Tintenstrahldruckverfahrens (Inkjet-Druckverfahren) und/oder einer Kombination hiervon gedruckt.

Für den Tintenstrahl-Druck, insbesondere auf Polycarbonat-Substratschichten, sind grundsätzlich alle fachüblichen Tinten einsetzbar. Bevorzugt ist die Verwendung einer Zubereitung, enthaltend: A) 0,1 bis 20 Gew.% eines Bindemittels mit einem Polycarbonatderivat, B) 30 bis 99,9 Gew.% eines vorzugsweise organischen Lösungsmittels oder Lösungsmittelgemischs, C) 0 bis 10 Gew.% eines Farbmittels oder Farbmittelgemischs (Gew.% bezogen auf dessen Trockenmasse), D) 0 bis 10 Gew.-% eines funktionalen Materials oder einer Mischung funktionaler Materialien, E) 0 bis 30 Gew.% Additive und/oder Hilfsstoffe, oder einer Mischung solcher Stoffe, wobei die Summe der Komponenten A) bis E) stets 100 Gew.% ergibt, als Tintenstrahldruckfarbe. Solche Polycarbonatderivate sind hochkompatibel mit Polycarbonatwerkstoffen, insbesondere mit Polycarbonaten auf Basis Bisphenol A, wie beispielsweise Makrofol® Folien. Zudem ist das eingesetzte Polycarbonatderivat hochtemperaturstabil und zeigt keinerlei Verfärbungen bei laminationstypischen Temperaturen bis zu 200°C und mehr, wodurch auch der Einsatz der vorstehend beschriebenen Nieder-T_{g}-Werkstoffe nicht notwendig ist. Im Einzelnen kann das Polycarbonatderivat funktionelle Carbonatstruktureinheiten der Formel (I) enthalten, 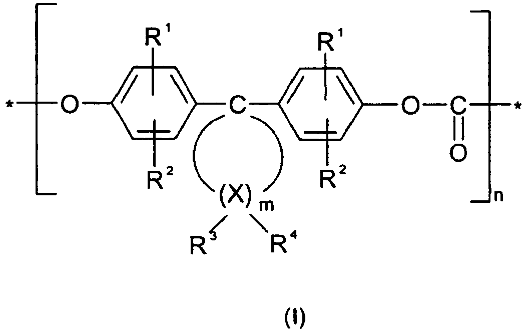 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl sind;
m eine ganze Zahl von 4 bis 7, bevorzugt 4 oder 5 ist; R³ und R⁴ für jedes X individuell wählbar, unabhängig voneinander Wasserstoff oder C₁-C₆-Alkyl ist; X Kohlenstoff und n eine ganze Zahl größer 20 bedeuten, mit der Maßgabe, dass an mindestens einem Atom X, R³ und R⁴ gleichzeitig Alkyl bedeuten. Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonatderivat kann beispielsweise auf Basis von Monomeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein. Ein solches Polycarbonatderivat kann beispielsweise gemäß der Literaturstelle DE 38 32 396.6 aus Diphenolen der Formel (la) hergestellt werden. Es können sowohl ein Diphenol der Formel (la) unter Bildung von Homopolycarbonaten als auch mehrere Diphenole der Formel (la) unter Bildung von Copolycarbonaten verwendet werden (Bedeutung von Resten, Gruppen und Parametern, wie in Formel I).

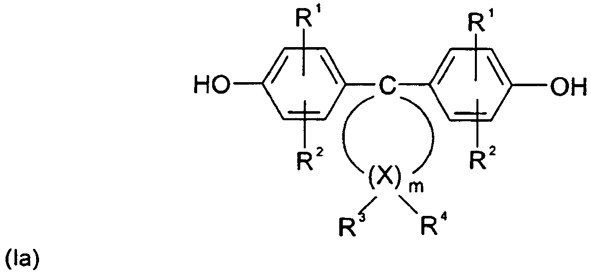

Außerdem können die Diphenole der Formel (Ia) auch im Gemisch mit anderen Diphenolen, beispielsweise mit denen der Formel (Ib)

HO-Z-OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann. Beispiele der Diphenole der Formel (Ib) sind: Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha , alpha'-Bis-(hydroxyphenyl)-diisopropylbenzole sowie deren kernalkylierte und kernhalogenierte Verbindungen. Diese und weitere geeignete Diphenole sind z.B. in den Literaturstellen US-A 3,028,365, 2,999,835, 3,148,172, 3,275.601, 2,991,273, 3,271,367, 3,062,781, 2,970,131 und 2,999,846, in den Literaturstellen DE-A 1 570 703, 2 063 050, 2 063 052, 2 211 956, der FR-A 1 561 518 und in der Monographie "H. Schnell, Chemistry and Physics of Polycarbonates, Interscience Publishers, New York 1964", beschrieben. Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan. Besonders bevorzugte Diphenole der Formel (Ib) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden. Das molare Verhältnis von Diphenolen der Formel (la) zu den gegebenenfalls mitzuverwendenden anderen Diphenolen der Formel (Ib), soll zwischen 100 Mol% (Ia) zu 0 Mol% (Ib) und 2 Mol-% (Ia) zu 98 Mol-% (Ib), vorzugsweise zwischen 100 Mol-% (Ia) zu 0 Mol% (Ib) und 10 Mol-% (la) zu 90 Mol-% (Ib) und insbesondere zwischen 100 Mol-% (la) zu 0 Mol% (Ib) und 30 Mol% (la) zu 70 Mol-% (Ib) liegen. Die hochmolekularen Polycarbonatderivate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein. Die eingesetzten Polycarbonatderivate können in an sich bekannter Weise verzweigt sein. Wenn die Verzweigung gewünscht wird, kann diese in bekannter Weise durch Einkondensieren geringer Mengen, vorzugsweise Mengen von 0,05 bis 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind: Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyi]-orthoterephthalsäureester, Tetra-(4-hydroxyphenyl)-methan, Tetra-(4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (Ic) geeignet 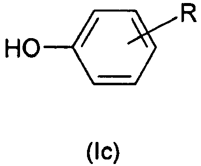 worin R einen verzweigten C₈- und/oder C₉-Alkylrest darstellt. Bevorzugt ist im Alkylrest R der Anteil an CH₃-Protonen zwischen 47 % und 89 % und der Anteil der CH- und CH₂-Protonen zwischen 53 % und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt. Die Polycarbonatderivate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden. Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C. Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden. Geeignete organische Lösungsmittel für die Kettenabbrecher sowie gegebenenfalls für die Verzweiger und die Chlorkohlensäureester sind beispielsweise Methylenchlorid, Chlorbenzol sowie insbesondere Mischungen aus Methylenchlorid und Chlorbenzol. Gegebenenfalls können die verwendeten Kettenabbrecher und Verzweiger im gleichen Solvens gelöst werden. Als organische Phase für die Phasengrenzflächenpolykondensation dienen beispielsweise Methylenchlorid, Chlorbenzol sowie Mischungen aus Methylenchlorid und Chlorbenzol. Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden. Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden. Die Polycarbonatderivate können linear oder verzweigt sein, sie sind Homopolycarbonate oder Copolycarbonate auf Basis der Diphenole der Formel (la). Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (la) in Mengen von 100 Mol% bis 2 Mol%, vorzugsweise in Mengen von 100 Mol-% bis 10 Mol% und insbesondere in Mengen von 100 Mol% bis 30 Mol-%, bezogen auf die Gesamtmenge von 100 Mol% an Diphenoleinheiten, in Polycarbonatderivaten enthalten. Das Polycarbonatderivat kann ein Copolymer sein enthaltend, insbesondere hieraus bestehend, Monomereinheiten M1 auf Basis der Formel (Ib),vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, wobei das Molverhältnis M2/M1 vorzugsweise größer als 0,3, insbesondere größer als 0,4, beispielsweise größer als 0,5 ist. Bevorzugt ist es, wenn das Polycarbonatderivat ein mittleres Molekulargewicht (Gewichtsmittel) von mindestens 10.000, vorzugsweise von 20.000 bis 300.000, aufweist.

Die Komponente B kann grundsätzlich im Wesentlichen organisch oder wässrig sein. Im Wesentlichen wässrig bedeutet dabei, dass bis zu 20 Gew.-% der Komponente B) organische Lösungsmittel sein können. Im Wesentlichen organisch bedeutet, dass bis zu 5 Gew.-% Wasser in der Komponente B) vorliegen können. Vorzugsweise enthält die Komponente B einen bzw. besteht aus einem flüssigen aliphatischen, cycloaliphatischen, und/oder aromatischen Kohlenwasserstoff, einem flüssigen organischen Ester und/oder einer Mischung solcher Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4-Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat. Ethyl-3-ethoxypropionat. Ganz besonders bevorzugt sind: Mesitylen (1,3,5-Trimethylbenzol), 1,2,4-Trimethylbenzol, Cumol (2-Phenylpropan), Solvent Naptha und Ethyl-3-ethoxypropionat. Ein geeignetes Lösungsmittelgemisch umfasst beispielsweise L1) 0 bis 10 Gew.-%, vorzugsweise 1 bis 5 Gew.-%, insbesondere 2 bis 3 Gew.%, Mesitylen, L2) 10 bis 50 Gew.-%, vorzugsweise 25 bis 50 Gew.-%, insbesondere 30 bis 40 Gew.%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.%, insbesondere 0,05 bis 0,5 Gew.%, Cumol, und L6) 0 bis 80 Gew.%, vorzugsweise 1 bis 40 Gew.-%, insbesondere 15 bis 25 Gew.%, Solvent Naphtha, wobei die Summe der Komponenten L1 bis L6 stets 100 Gew.-% ergibt. Das Polycarbonatderivat weist typischerweise ein mittleres Molekulargewicht (Gewichtsmittel) von mindestens 10.000, vorzugsweise von 20.000 bis 300.000.

Die Zubereitung kann im Detail enthalten: A) 0,1 bis 10 Gew.-%, insbesondere 0,5 bis 5 Gew.%, eines Bindemittels mit einem Polycarbonatderivat auf Basis eines geminal disubstituierten Dihydroxydiphenylcycloalkans, B) 40 bis 99,9 Gew.%, insbesondere 45 bis 99,5 Gew.-%, eines organischen Lösungsmittels oder Lösungsmittelgemischs, C) 0,1 bis 6 Gew.-%, insbesondere 0,5 bis 4 Gew.-%, eines Farbmittels oder Farbmittelgemischs, D) 0,001 bis 6 Gew.-%, insbesondere 0,1 bis 4 Gew.%, eines funktionales Materials oder einer Mischung funktionaler Materialien, E) 0,1 bis 30 Gew.-%, insbesondere 1 bis 20 Gew.-%, Additive und/oder Hilfsstoffe, oder einer Mischung solcher Stoffe.

Als Komponente C, sofern ein Farbmittel vorgesehen sein soll, kommt grundsätzlich jedes beliebige Farbmittel oder Farbmittelgemisch in Frage. Unter Farbmittel sind alle farbgebenden Stoffe bezeichnet. Das bedeutet, es kann sich sowohl um Farbstoffe (einen Überblick über Farbstoffe gibt Ullmann's Encyclopedia of Industrial Chemistry, Electronic Release 2007, Wiley Verlag, Kapitel "Dyes, General Survey") wie auch Pigmente (einen Überblick über organische wie anorganische Pigmente gibt Ullmann's Encyclopedia of Industrial Chemistry, Electronic Release 2007, Wiley Verlag, Kapitel "Pigments, Organic" bzw. "Pigments, Inorganic") handeln. Farbstoffe sollten in den Lösungsmitteln der Komponente B löslich bzw. (stabil) dispergierbar oder suspendierbar sein. Des Weiteren ist es vorteilhaft, wenn das Farbmittel bei Temperaturen von 160 °C und mehr für einen Zeitraum von mehr als 5 min. stabil, insbesondere farbstabil ist. Es ist auch möglich, dass das Farbmittel einer vorgegebenen und reproduzierbaren Farbveränderung unter den Verarbeitungsbedingungen unterworfen ist und entsprechend ausgewählt wird. Pigmente müssen neben der Temperaturstabilität insbesondere in feinster Partikelgrößenverteilung vorliegen. In der Praxis des Tintenstrahldrucks bedeutet dies, dass die Teilchengröße nicht über 1,0 µm hinausgehen sollte, da sonst Verstopfungen im Druckkopf die Folge sind. In der Regel haben sich nanoskalige Festkörperpigmente und gelöste Farbstoffe bewährt. Die Farbmittel können kationisch, anionisch oder auch neutral sein. Lediglich als Beispiele für im Tintenstrahldruck verwendbare Farbmittel seinen genannt: Brillantschwarz C.I. Nr. 28440, Chromogenschwarz C.I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscript^{®} Schwarz flüssig, C.I. Basic Black 11, C.I. Basic Blue 154, Cartasol^{®} Türkis K-ZL flüssig, Cartasol^{®} Türkis K-RL flüssig (C.I. Basic Blue 140), Cartasol Blau K5R flüssig. Geeignet sind des Weiteren z. B. die im Handel erhältlichen Farbstoffe Hostafine^{®} Schwarz TS flüssig (vertrieben von Clariant GmbH Deutschland), Bayscript^{®} Schwarz flüssig (C.I.-Gemisch, vertrieben von Bayer AG Deutschland), Cartasol^{®} Schwarz MG flüssig (C.I. Basic Black 11, Eingetragenes Markenzeichen der Clariant GmbH Deutschland), Flexonylschwarz^{®} PR 100 (E C.I. Nr. 30235, vertrieben von Hoechst AG), Rhodamin B, Cartasol^{®} Orange K3 GL, Cartasol^{®} Gelb K4 GL, Cartasol^{®} K GL, oder Cartasol^{®} Rot K-3B. Des Weiteren können als lösliche Farbmittel Anthrachinon-, Azo-, Chinophthalon-, Cumarin-, Methin-, Perinon-, und/oder Pyrazolfarbstoffe, z.B. unter dem Markennamen Macrolex® erhältlich, Verwendung finden. Weitere geeignete Farbmittel sind in der Literaturstelle Ullmann's Encyclopedia of Industrial Chemistry, Electronic Release 2007, Wiley Verlag, Kapitel "Colorants Used in Ink Jet Inks" beschrieben. Gut lösliche Farbmittel führen zu einer optimalen Integration in die Matrix bzw. das Bindemittel der Druckschicht. Die Farbmittel können entweder direkt als Farbstoff bzw. Pigment zugesetzt werden oder als Paste, einem Gemisch aus Farbstoff und Pigment zusammen mit einem weiteren Bindemittel. Dieses zusätzliche Bindemittel sollte chemisch kompatibel mit den weiteren Komponenten der Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren. Bei Verwendung von so genannten Buntpigmenten in den Skalenfarben Cyan-Magenta-Yellow und bevorzugt auch (Ruß)-Schwarz sind Volltonfarbabbildungen möglich.

Die Komponente D umfasst Substanzen, die unter Einsatz von technischen Hilfsmitteln unmittelbar durch das menschliche Auge oder durch Verwendung von geeigneten Detektoren ersichtlich sind. Hier sind die dem Fachmann einschlägig bekannten Materialien (vgl. auch van Renesse, Optimal document security, 3rd Ed., Artech House, 2005) gemeint, die zur Absicherung von Wert und Sicherheitsdokumenten eingesetzt werden. Dazu zählen Lumineszenzstoffe (Farbstoffe oder Pigmente, organisch oder anorganisch) wie z.B. Photoluminophore, Elektroluminophore, Antistokes Luminophore, Fluorophore aber auch magnetisierbare, photoakustisch adressierbare oder piezoelektrische Materialien. Des Weiteren können Raman-aktive oder Ramanverstärkende Materialien eingesetzt werden, ebenso wie so genannte Barcode-Materialien. Auch hier gelten als bevorzugte Kriterien entweder die Löslichkeit in der Komponente B oder bei pigmentierten Systemen Teilchengrößen < 1 µm sowie eine Temperaturstabilität für Temperaturen > 160 °C im Sinne der Ausführungen zur Komponente C. Funktionale Materialien können direkt zugegeben werden oder über eine Paste, d.h. einem Gemisch mit einem weiteren Bindemittel, welches dann Bestandteil der Komponente E bildet, oder dem eingesetzten Bindemittel der Komponente A.

Die Komponente E umfasst bei Tinten für einen Tintenstrahldruck üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme, etc. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel^{®}GXL und Parmetol^{®} A26. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxilierte Diole usw.. Beispiele sind die Produktreihen Surfynol^{®} und Tergitol^{®}. Die Menge an Tensiden wird insbesondere bei einer Anwendung für den Tintenstrahldruck beispielsweise mit der Maßgabe gewählt, dass die Oberflächenspannung der Tinte im Bereich von 10 bis 60 mN/m, vorzugsweise 20 bis 45 mN/m, gemessen bei 25 °C, liegt. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität der Tinte können (ggf. wasserlösliche) Polymere vorgesehen sein. Hier kommen alle für übliche Tintenformulierungen geeigneten Polymere in Frage. Beispiele sind wasserlösliche Stärke, insbesondere mit einem mittleren Molekulargewicht von 3.000 bis 7.000, Polyvinylpyrrolidon, insbesondere mit einem mittleren Molekulargewicht von 25.000 bis 250.000, Polyvinylalkohol, insbesondere mit einem mittleren Molekulargewicht von 10.000 bis 20.000, XanthanGummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic^{®}. Der Anteil an Biozid, bezogen auf die Gesamtmenge an Tinte, kann im Bereich von 0 bis 0,5 Gew-%, vorzugsweise 0,1 bis 0,3 Gew.-%, liegen. Der Anteil an Tensid, bezogen auf die Gesamtmenge an Tinte, kann im Bereich von 0 bis 0,2 Gew.-% liegen. Der Anteil an Stellmitteln kann, bezogen auf die Gesamtmenge an Tinte, 0 bis 1 Gew.-%, vorzugsweise 0,1 bis 0,5 Gew.-%, betragen. Zu den Hilfsmitteln werden auch sonstige Komponenten gezählt, wie beispielsweise Essigsäure, Ameisensäure oder n-Methyl-Pyrrolidon oder sonstige Polymere aus der eingesetzten Farbstofflösung oder -Paste. Bezüglich Substanzen, welche als Komponente E geeignet sind, wird ergänzend beispielsweise auf Ullmann's Encyclopedia of Chemical Industry, Electronic Release 2007, Wiley Verlag, Kapitel "Paints and Coatings", Sektion "Paint Additives", verwiesen.

Die Merkmale des erfindungsgemäßen Polymerschichtverbunds und/oder eines Wert- und/oder Sicherheitsdokuments weisen dieselben Vorteile wie die entsprechenden Merkmale des erfindungsgemäßen Herstellungsverfahrens auf. Eine Verteilung der ersten personalisierenden und/oder individualisierenden Information und gegebenenfalls einer oder mehrerer weiterer zweiter personalisierender und/oder individualisierender Informationen in unterschiedlichen Ebenen des Polymerverbunds bzw. Wert- und/oder Sicherheitsdokuments liefert ein Sicherheitsmerkmal, welches gegenüber einer Verfälschung eine sehr hohe Sicherheit bietet. Auch gegenüber einer Nachahmung ist eine hohe Fälschersicherheit gegeben, da ein hochauflösender passergenauer Druck der ersten personalisierenden und/oder individualisierenden Informationen, die beispielsweise ein farbiges Gesichtsbild umfassen, nur mit sehr hohem technischen Aufwand zu realisieren ist, wenn die farbige Information auf verschiedene Ebenen des Polymerschichtverbunds bzw. des Wert- und/oder Sicherheitsdokuments verteilt wird. Bei der Verwendung einer Tinte, die auf Polycarbonatbasis hergestellt ist, und von Substratschichten, die ebenfalls auf Polycarbonatbasis hergestellt sind, ergibt sich nach dem Laminieren ein monolithischer Körper, in dem keine Übergänge der bei der Herstellung verwendeten Substratschichten mehr erkennbar sind. Auch die aufgedruckte Farbe ist dann vollständig in den monolithischen Köper, d.h. den monolithischen Polymerschichtverbund, integriert. Hierdurch kann ein großflächiges Bedrucken mit den ersten personalisierenden und/oder individualisierenden Informationen erfolgen, ohne dass eine Gefahr einer Delamination, wie sie bei einer Verwendung von anderen Tinten und/oder Druckfarben besteht. Insbesondere bei destruktiven Prüfverfahren zur Ermittlung der Echtheit eines Wert- und/oder Sicherheitsdokuments kann ein so ausgebildetes Sicherheitsmerkmal zuverlässig erkannt werden. Nicht destruktive Prüfverfahren, bei denen ein Abstand der einzelnen Druckauszüge von einer Oberfläche des Polymerschichtverbunds bzw. Wert- und/oder Sicherheitsdokuments ermittelt werden, können ebenso zur Verifizierung des neuartigen Sicherheitsmerkmals verwendet werden. Gegenüber Verfahren, die eine vollfarbige Aufbringung eines ersten Informationsanteils in einer Druckschicht und ein Zufügen von schwarzen Informationsanteilen mittels einer Lasergravur vorsehen, weist die beschriebene Erfindung den Vorteil auf, dass ein drucktechnisches Aufbringen der ersten personalisierenden und/oder individualisierenden Information hochaufgelöst, beispielsweise mittels Tintenstrahldruck, auf die unterschiedlichen Substratschichtoberflächen erfolgen kann und somit mit einer einheitlichen und einfachen, sehr gut beherrschten Drucktechnik möglich ist. Ein zusätzliches Vorsehen einer Lasergravur ist somit im Verfahren nicht notwendig, jedoch selbstverständlich als zusätzliches Sicherheitsmerkmal möglich. Somit ist ein Herstellungsverfahren insgesamt vereinfacht.

Ferner lassen sich dreidimensionale optische Effekte bei geeigneter Zerlegung der ersten Information mit der Erfindung realisieren.

Nachfolgend werden bevorzugte Ausführungsformen unter Bezugnahme auf eine Zeichnung näher erläutert. Hierbei zeigen:
- Fig. 1: eine schematische Vorrichtung zum Herstellen eines als Polymerschichtverbund ausgebildeten Sicherheits- und/oder Wertdokuments;
- Fig. 2: eine schematische Darstellung eines Aufbaus eines als Polymerschichtverbund ausgebildeten Sicherheits- und/oder Wertdokuments;
- Fig. 3a-3c: weitere schematische Darstellungen zur Erläuterung der Herstellung eines als Polymerschichtverbund ausgebildeten Sicherheits- und/oder Wertdokuments;
- Fig. 4: eine weitere schematische Darstellung eines weiteren mehrlagig personalisierten Polymerschichtverbunds;
- Fig. 5: eine schematische Darstellung eines Aufbaus eines als Polymerschichtverbund ausgebildeten Wert- und/oder Sicherheitsdokuments mit einer ersten und einer zweiten personalisierenden und/oder individualisierenden Information;
- Fig. 6: eine schematische Darstellung eines weiteren als Polymerschichtverbund ausgebildeten Sicherheits- und/oder Wertdokuments mit einem integrierten Chip;
- Fig. 7: eine schematische Darstellung eines Polymerschichtverbundes, in dem ein diffraktives Element mit eingearbeitet ist.

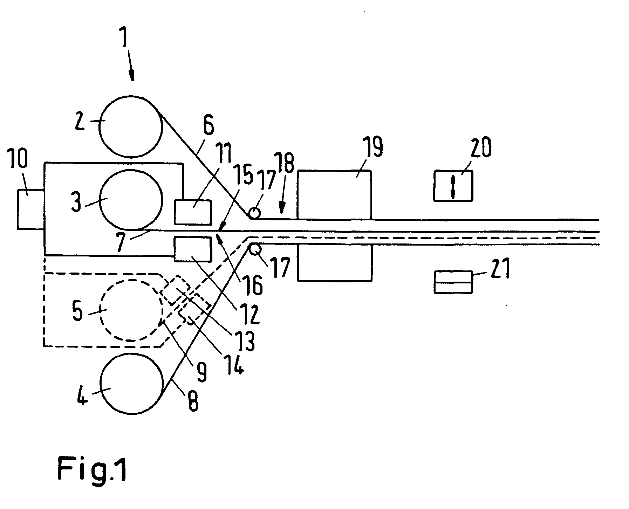

Anhand von Fig. 1 soll beispielhaft ein Verfahren zum Herstellen eines Wert- und/oder Sicherheitsdokuments erläutert werden, welches als Polymerschichtverbund ausgebildet ist. In Fig. 1 ist eine Vorrichtung zum Herstellen eines Polymerschichtverbunds dargestellt. Die Vorrichtung umfasst mehrere Rollen, auf denen Polymerfolien, vorzugsweise Polycarbonatfolien, aufgewickelt sind. Zur Herstellung eines Polymerschichtverbunds werden mindestens drei Polymerschichten als Substratschichten benötigt. Diese sind auf den Rollen 2-4 angeordnet. Optional können ein oder mehrere weitere, insbesondere eins bis zwölf, besonders bevorzugt zwei bis zehn und besonders bevorzugt vier bis sechs, Polymerschichten auf Rollen zugeführt werden. Diese möglichen zusätzlichen Polymerschichten, die als Substrat zur Verfügung gestellt werden, sind über die Rolle 5, welche gestrichelt dargestellt ist, symbolisiert. Die von den Rollen 2-5 bereitgestellten bzw. zugeführten Polymerschichten 6-9 weisen Stärken zwischen 5 µm und 350 µm, vorzugsweise Stärken zwischen 50 µm und 150 µm auf. Die einzelnen Polymerschichten 6-9 können alle dieselbe Stärke oder unterschiedliche Stärken aufweisen.

Einer vorzugsweise als Computer ausgebildeten Steuereinheit 10 wird eine erste Personalisierungsinformation, beispielsweise in Form eines Computerdatensatzes, zugeführt. Die erste personalisierende und/oder individualisierende Information kann beispielsweise ein farbiges Gesichtsbild (Passfoto) sowie persönliche Angaben wie Name, Vorname, Geburtsdatum, Wohnort, Geburtsort, Straße, Hausnummer, Postleitzahl usw. umfassen. Die Steuereinheit 10 ist so ausgebildet, dass sie die ersten personalisierenden und/oder individualisierenden Informationen in mindestens zwei Druckauszüge zerlegt, die jeweils eine Teilinformation der ersten personalisierenden und/oder individualisierenden Informationen umfassen. Beispielsweise werden von dem farbigen Gesichtsbild drei monochrome Farbauszüge in einem Cyan-Magenta-Gelb-Farbraum bzw., -Farbsystem erstellt. Zusätzlich kann ein vierter Farbauszug für schwarze und/oder graue Bildbestandteile erstellt werden. Die mindestens zwei Farbdruckauszüge, welche beispielsweise mit den monochromen Farbauszügen identisch sind oder eine Kombination aus zwei monochromen Farbauszügen darstellen, werden an Druckeinheiten 11-14 übermittelt. Diese Druckeinheiten 11-14 sind als digitale Druckeinheiten ausgebildet, was bedeutet, dass diese ein digitales Druckverfahren ausführen. Vorzugsweise sind die Druckeinheiten 11-14 als Tintenstrahldruckeinheiten ausgebildet. Bei einigen Ausführungsformen können die verschiedenen Druckeinheiten 11-14 auch nach verschiedenen digitalen Druckverfahren drucken.

Bei einer Ausführungsform, bei der lediglich die drei Polymerschichten 6-8 von den Rollen 2-4 zur Verfügung gestellt werden, werden über die Druckeinheiten 11 und 12 beispielsweise zwei Druckauszüge auf gegenüberliegende Oberflächen der Polymerschicht 7 passergenau gedruckt. Dies bedeutet, dass auf die Substratschicht, die durch die Polymerschicht 7 bereitgestellt wird, auf eine Oberseite 15, d.h. eine obere Substratschichtoberfläche, durch die Druckeinheit 11, beispielsweise ein Druckauszug, gedruckt wird, der eine Vereinigung eines gelben und magentafarbenen monochromatischen Farbauszug der ersten personalisierenden und/oder individualisierenden Information ist. Auf eine Unterseite 16 (eine untere Substratschichtoberfläche) der durch die Polymerschicht 7 bereitgestellten Substratschicht wird durch die Druckeinheit 12 passergenau zu dem ersten Druckauszug der zweite Druckauszug aufgedruckt, der eine Vereinigung eines schwarzen Farbauszugs und eines cyanfarbenen Farbauszugs ist.

In anderen Ausführungsformen können die Druckeinheiten 11-14 jeweils einen monochromatischen Farbauszug eines Dreifarben-Schwarz-Farbsystems ausdrucken, wobei der schwarze Farbauszug hier ebenfalls als monochromatischer Farbausdruck angesehen wird. Dies bedeutet, dass die Druckeinheiten 13 und 14 auf die Polymerschicht 9 jeweils passergenau ebenfalls zwei verschiedene Druckauszüge drucken. In einem solchen Fall ist es vorteilhaft, wenn zwischen die Polymerschichten 7 und 9 noch eine weitere transparente Polymerschicht eingefügt ist (nicht dargestellt), so dass die von den Druckeinheiten 12 und 13 gedruckten Druckauszüge im fertiggestellten Polymerschichtverbund zueinander beabstandet sind. Dieses ist jedoch nicht zwingend erforderlich. Bei anderen Ausführungsformen kann auch ein Bedrucken der innen liegenden Substratschichtoberflächen der äußeren Substratschichten (Polymerschichten) vorgesehen sein.

Die Polymerschichten 6-8 bzw. 6-9 werden über Umlenkrollen 17 geführt und zu einem Polymerschichtenstapel bzw. Substratschichtenstapel 18 zusammengeführt. Das Zusammentragen oder Zusammenführen der einzelnen Polymerschichten 6-9 erfolgt so, zumindest wenn die mindestens zwei Druckauszüge auf unterschiedliche Substrate bzw. Polymerschichten 6-9 gedruckt sind und diese gleiche Ausdehnungs- und/oder Schrumpfungseigenschaften bei einer Lamination aufweisen, dass die einzelnen Druckauszüge, d.h. die gedruckten Druckauszüge, in dem Substratschichtenstapel 18 passergenau übereinander angeordnet sind.

Anschließend werden die Substratschichten bzw. Polymerschichten 6-8 bzw. 6-9 zu einem Verbundkörper zusammengefügt. Das Fügen erfolgt über ein Laminationsverfahren, welches vorzugsweise über eine Heiß- und Kaltpresse 19 ausgeführt wird. Die miteinander verbundenen Substratschichten bzw. Polymerschichten 6-8 bzw. 6-9 werden einer Vereinzelungseinheit 20 zugeführt, die beispielsweise als Stanze ausgeführt ist und ein Sicherheits- und/oder Wertdokument 21, welches ein Polymerschichtverbund ist, beispielsweise ausstanzt und/oder ausschneidet.

Für den Fachmann versteht es sich, dass das Herstellungsverfahren hier stark vereinfacht beschrieben ist. Selbstverständlich können weitere Verfahrensschritte und Vorrichtungsteile eingefügt und/oder zugefügt sein, die zum Einbringen weiterer Sicherheitselemente und/oder Sicherheitsmerkmale für ein Sicherheits- und/oder Wertdokument vorgesehen sind. Beispielsweise kann eine Lasergravurstation vorgesehen sein und/oder ein Hologramm in Form einer weiteren Schicht, vorzugsweise einer entwickelten photosensitiven Polymerschicht vor dem Laminieren zugefügt sein. Insbesondere können auch noch weitere, nicht-digitale Druckverfahren angewendet werden, um z.B. Guillochen über klassischen Offsetdruck, oder OVI-Farben über Siebdruck, lumineszierende Farben usw. aufzutragen. Gegebenenfalls gibt es auch Trockungsstationen für diese Druckfarben, wie UV-Fixierung usw.

Bei dem im Zusammenhang mit Fig. 1 beschriebenen Herstellungsprozess werden die einzelnen Substratschichten in Form von auf Rollen bereitgestellten Polymerschichten zugeführt. Bei einer anderen Ausführungsform des Verfahrens können die einzelnen Polymerschichten bzw. Substratschichten in Form von Bogen bedruckt und/oder zusammengetragen werden. Eine passergenaue Ausrichtung erfolgt vorzugsweise über eine so genannte Dreipunktanlage der einzelnen zusammengetragenen Bögen. Vor dem Laminationsvorgang, in dem die einzelnen Polymerschichten zum Verbundkörper gefügt werden, kann eine Heftung, beispielsweise über ein Ultraschallverbinden und/oder ein gezieltes Einbringen von Laserstrahlung, in einzelnen Grenzschichten aneinander angrenzender Substratschichten lokal an einer oder mehreren Stellen erfolgen. Auch andere Heftverfahren, beispielsweise über geheizte Klammern, können selbstverständlich angewendet werden. Ein Vereinzelungsschritt kann entfallen, wenn die Bogen passgenau auf dem herzustellenden Polymerschichtverbund angepasst sind.

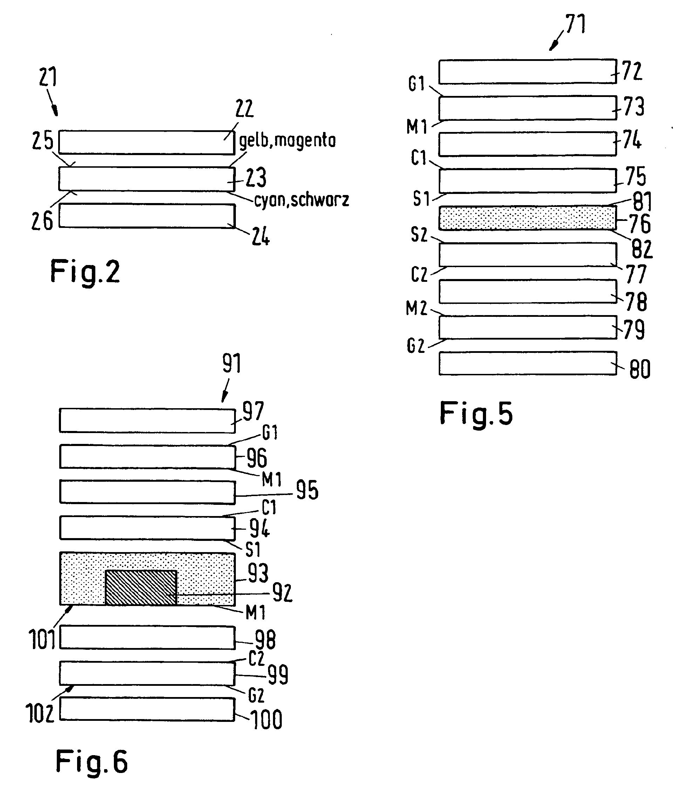

In Fig. 2 ist noch einmal schematisch der Aufbau eines als Polymerschichtverbund ausgebildeten Wert- und/oder Sicherheitsdokuments 21 dargestellt. Hierbei sind zur Veranschaulichung die einzelnen Substratschichten 22, 23, 24 voneinander beabstandet dargestellt. Im fertiggestellten Wert- und/oder Sicherheitsdokument 21 sind diese Schichten vorzugsweise monolithisch stoffschlüssig miteinander verbunden. Eine obere Substratschichtoberfläche 25 der Substratschicht 23 ist mit einem Druckauszug, der die monochromatischen Farbauszüge der Farben Gelb und Magenta umfasst, bedruckt. Eine untere Substratschichtoberfläche 26 der Substratschicht 23 ist entsprechend mit einem zweiten Druckauszug, der die monochromatischen Farbauszüge der Farben Cyan und Schwarz umfasst, bedruckt. Um die aufgedruckten personalisierenden und/oder individualisierenden Teilinformationen der beiden Druckauszüge gegen eine Manipulation und/oder Verfälschung zu schützen, sind außen liegend die Substratschichten 22 und 24 vorgesehen. Im fertiggestellten Polymerschichtverbund sind die beiden Druckauszüge in unterschiedlichen Ebenen des Sicherheits- und/oder Wertdokuments 21 angeordnet bzw. eingedruckt.

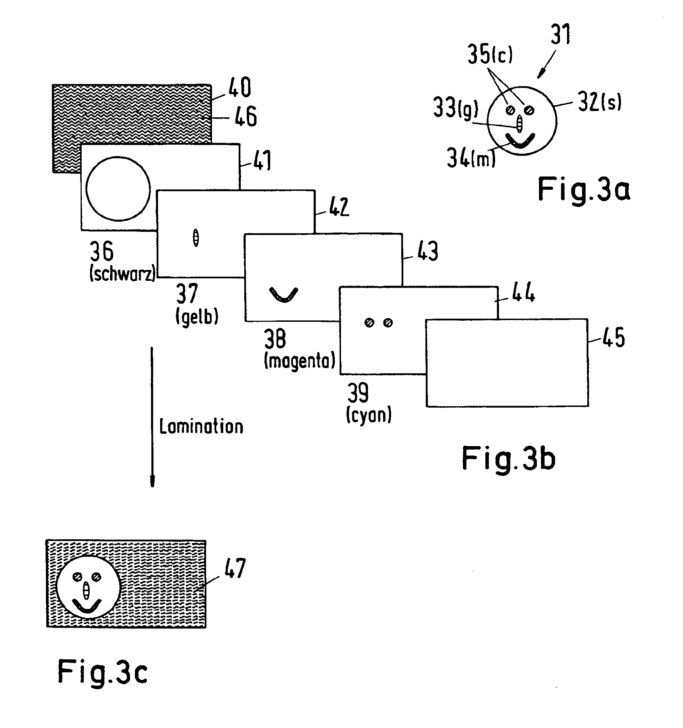

Anhand von den Fig. 3a-c soll beispielhaft erläutert werden, wie gemäß einer weiteren Ausführungsform eine ein farbiges Gesichtsbild umfassende erste Information in einen Polymerschichtverbund eingebracht wird. In Fig. 3a ist die ein Gesichtsbild darstellende erste Information 31 schematisch dargestellt. Den einzelnen Bestandteilen des Gesichtsbilds ist über einen Buchstaben jeweils die entsprechende Farbe zugeordnet, die dieser Bestandteil aufweist. Eine Umrisskontur 32 sei schwarz (s), eine Nase 33 sei gelb (g), ein Mund 34 magentafarben (m) und Augen 35. cyanfarben (c)

Die einzelnen Farbauszüge, d.h. die einzelnen Elemente des schematisch dargestellten Gesichtsbilds stellen jeweils einzelne Druckauszüge 36-39 dar, die jeweils auf eine Oberseite verschiedener Substratschichten 41-44 gedruckt werden, wie dieses in Fig. 3b dargestellt ist. Zusätzlich ist eine zuunterst angeordnete Substrat 40 beispielsweise mit einem Hintergrundmotiv, welches beispielsweise Guillochenlinien 46 umfasst, bedruckt. Die einzelnen bedruckten Substratschichten 41-44 werden passergenau übereinander zu einem Substratschichtenstapel zusammengetragen. Zusätzlich wird eine weitere Substratschicht 45 über der Substratschicht 44 angeordnet, welche wie die Substratschichten 41-44 transparent ausgebildet ist. In Fig. 3c ist schließlich die Draufsicht auf das Sicherheitsdokument 47 dargestellt, nachdem die einzelnen Substratschichten 40-45 zu dem Polymerschichtverbund mittels Lamination zusammengefügt worden sind. Gut zu erkennen ist, dass die einzelnen Druckauszüge gemeinsam die erste Information wiedergeben, wie sie in Fig. 3a dargestellt ist.

Bei einer weiteren Ausführungsform ähnlich zu der nach Fig. 3a-3c wird die erste Information, die eine Abbildung eines dreidimensionalen Objekts umfasst, in der Weise in Druckauszüge zerlegt, dass die Druckauszüge jeweils die Bildpunkte eines Tiefenbereichs bzw. einer Entfernungszone der Bildpunkte des realen Objekts von einem Betrachter umfassen. D. h., die Bildpunkte, des dreidimensionalen Objekts, die dem Betrachter am nächsten liegenden Objektkonturen eines ersten Entfernungsbereichs abbilden, werden einem Druckauszug zugewiesen. Die Bildpunkte, die Objektkonturen und Oberflächen eines sich anschließenden Entfernungsbereichs darstellen, werden einem weiteren Druckauszug zugewiesen. So wird fortgefahren, bis auch die Bildpunkte, die am weitesten entfernte Objektpunkte abbilden, einem Druckauszug zugewiesen sind. Es ergibt sich für den Fachmann, dass die Entfernungsbereiche so gewählt werden, dass man eine entsprechende Anzahl von Druckauszügen erhält, die gewünscht ist. Vorzugsweise werden zwischen 2 und 9 besonders bevorzugt zwischen 3 und 5 Druckauszüge verwendet. Die Druckauszüge werden auf Substratschichtoberflächen, vorzugsweise bunt, d. h. mittels mehrerer Farben pro Druckauszug auf verschiedene Substratschichtoberflächen gedruckt und so zusammengetragen, dass der Druckauszug, der die Bildpunkte umfasst, die die dem Betrachter am nächsten liegenden Objektpunkte abbilden, auf die unterste Substratschichtoberfläche und der Druckauszug, der die am weitesten von dem Betrachter entfernten Objektpunkte darstellt, auf die oberste der bedruckten Substratschichtoberflächen gedruckt wird. Die Druckauszüge werden quasi "invertiert" bezüglich eines Abstands der dargestellten Objektpunkte bezogen auf eine betrachtete obere Oberfläche des erzeugten Substratschichtstapels oder Substratschichtverbunds in den Substratschichtverbund eingebracht. Hierdurch wird der Effekt erreicht, dass das dreidimensionale Objekt aus dem Schichtverbund herauszutreten scheint. Dieses hat seine Ursache darin, dass das menschliche Gehirn zumindest ein bekanntes Objekt, beispielsweise ein Gesicht, zurückinvertiert. Würde die Nase auf die unterste Substratschichtoberfläche, der Mund und die Augen in dieser Reichenfolge auf die darüber angeordneten Substratschichtoberflächen und die Ohren auf die oberste Substratschichtoberfläche gedruckt, so würde das Gesicht für einen menschlichen Betrachter scheinbar aus der obersten bedruckten Substratschichtoberfläche nach vorne heraustreten.

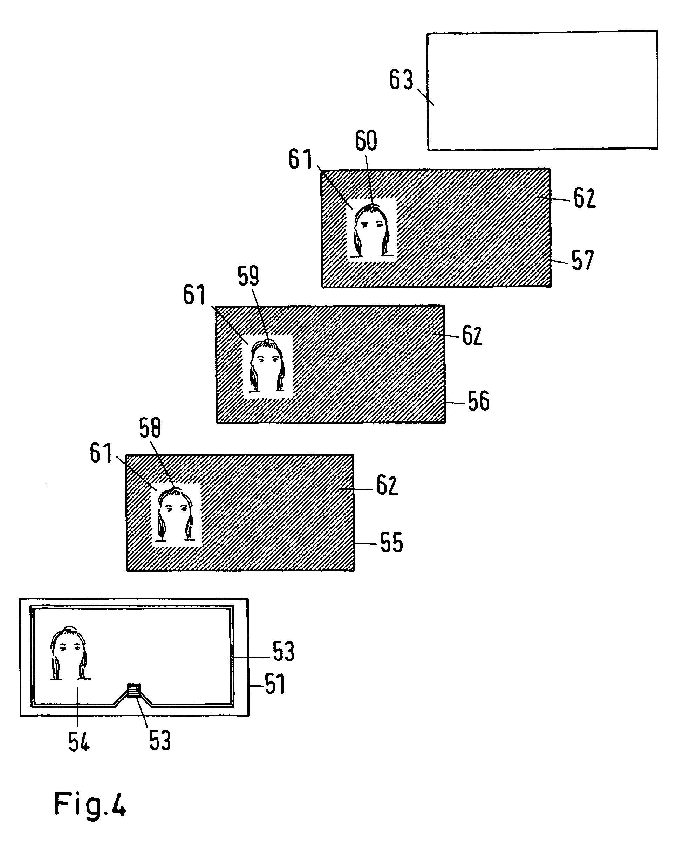

In Fig. 4 ist eine ähnliche Darstellung zu der nach Fig. 3b dargestellt. Auf einer ersten Substratschicht 51 ist eine Antennenstruktur 52 aufgedruckt, mit der ein Mikrochip 53 verbunden ist. Diese erste Substratschicht 51 wird nach dem Aufdrucken der Antennenstruktur und dem Aufbringen des Mikrochips 53 mit einem ersten Druckauszug 54 (z. B. schwarz) einer ersten Information, die ein Gesichtsbild umfasst, bedruckt. Die in dem Polymerschichtverbund darüber angeordneten Substratschichten 55-57 sind mit weiteren Druckauszügen 58-60 (z. B. cyan-magenta-gelb) bedruckt, die jeweils eine Teilinformation der ersten Information, d.h. des Gesichtsbilds, umfassen. Die Substratschichten 55-57 sind in der beschriebenen Ausführungsform so ausgebildet, dass sie jeweils einen transparenten Bereich 61 umfassen, in dem die entsprechenden Druckauszüge 58-60 aufgedruckt werden. Die übrigen Flächenbereiche 62 der Substratschichten 55-57 sind bei dieser Ausführungsform vollflächig bedruckt. Dieser Druck kann auch mit einem nicht digitalen Druckverfahren, beispielsweise im Flachdruck (Offset) oder indirektem Hochdruck (Letterset), ausgeführt sein. Vorzugsweise wird eine Farbe auf Polycarbonatbasis identisch oder ähnlich zu der oben beschriebenen Zubereitung verwendet, um eine mögliche Delamination zu verhindern, die bei Verwendung anderer Druckfarben besteht.

Vor dem Laminieren werden die erste Substratschicht 51 und die übrigen Substratschichten 55-57 gemeinsam mit einer transparenten Substratschicht 63 passergenau zusammengetragen und zu einem Polymerschichtverbund verbunden. Zusätzlich können unterhalb der ersten Substratschicht, welche vorzugsweise opak ausgebildet ist, weitere Substratschichten angeordnet werden, auf deren Substratschichtoberflächen beispielsweise eine zweite, vorzugsweise von der ersten personalisierenden und/oder individualisierenden Information verschiedene und ebenfalls vorzugsweise farbige personalisierende und/oder individualisierende Information, zerlegt in mehrere weitere Druckauszüge, die jeweils eine Teilinformation der zweiten personalisierenden und/oder individualisierenden Information umfassen, aufgedruckt wird.

In den Fig. 5 und 6 sind schematisch weitere Aufbauten von als Polymerschichtverbund ausgebildeten Wert- und/oder Sicherheitsdokumenten dargestellt. In Fig. 5 ist ein Wert- und/oder Sicherheitsdokument 71 dargestellt, welches einen Polymerschichtverbund umfasst, der aus neun Substratschichten 72-80, die Polymerschichten, beispielsweise alle Polycarbonatschichten, sind, hergestellt ist. Eine mittlere Substratschicht 76 ist opak ausgebildet und gegebenenfalls sowohl auf einer Oberseite 81 als auch auf einer Unterseite 82 vorzugsweise vollflächig bedruckt. Die Substratschichten 73 und 75 sind jeweils auf ihren entsprechenden Oberseiten und Unterseiten jeweils mit einem von vier verschiedenen Druckauszügen einer ersten personalisierenden und/oder individualisierenden Information bedruckt, wobei die Farben, mit denen die einzelnen Druckauszüge gedruckt sind, mit den Buchstaben c für Cyan, m wie für Magenta, g für Gelb und s für Schwarz angedeutet sind. Analog sind die Substratschichten 77 und 79 an ihren Ober- und Unterseiten mit verschiedenen Druckauszügen einer zweiten individualisierenden und/oder personalisierenden Information bedruckt. Die einzelnen Farben sind entsprechend ebenfalls über Buchstaben kenntlich gemacht. Die nachgestellte arabische Ziffer deutet jeweils an, dass die entsprechende Schicht eine Teilinformation der ersten Information (1) oder der zweiten Information (2) umfasst. Die eingezeichneten Zwischenräume sind erneut lediglich zur Veranschaulichung des Herstellungsverfahrens eingefügt. Im fertiggestellten Zustand sind keine Übergänge der ursprünglich vorhandenen Substratschichten mehr beobachtbar. Lediglich die Druckauszüge zeigen an, wo ehemals Substratschichtoberflächen vor dem Fügen waren.

Analog zu der Darstellung nach Fig. 5 zeigt die Fig. 6 eine weitere Ausführungsform eines Wert- und/oder Sicherheitsdokuments, welches ein Polymerschichtverbund ist. Bei dieser Ausführungsform eines Wert- und/oder Sicherheitsdokuments 91 ist eine elektronische Schaltung 92 in eine zentrale Substratschicht 93 eingelassen. Analog zu dem Aufbau des Wert- und Sicherheitsdokuments 71 nach Fig. 5 sind die Substratschichten 94 und 96 der Substratschichten 94-97, die oberhalb der Substratschicht 93 angeordnet sind, mit Druckauszügen einer ersten personalisierenden und/oder individualisierenden Information auf ihren Substratschichtoberflächen bedruckt. Unterhalb der Substratschicht 93 sind drei weitere Substratschichten 98-100 angeordnet. Bei dieser Ausführungsform ist ein erster Druckauszug einer zweiten individualisierenden und/oder personalisierenden Information in Form eines monochromatischen Farbauszugs, beispielsweise der Farbe Magenta, direkt auf die elektronische Schaltung 92 und eine untere Substratschichtoberfläche 101 aufgedruckt. Die Substratschicht 99 ist an ihren Substratschichtoberflächen mit einem cyanfarbenen Farbauszug und einem gelbfarbenen weiteren monochromatischen Farbauszug bedruckt. Eine untere Substratschichtoberfläche 102 der Substratschicht 99 kann zusätzlich zu dem gelben monochromatischen Farbauszug mit einem schwarzen Druckauszug bedruckt sein.

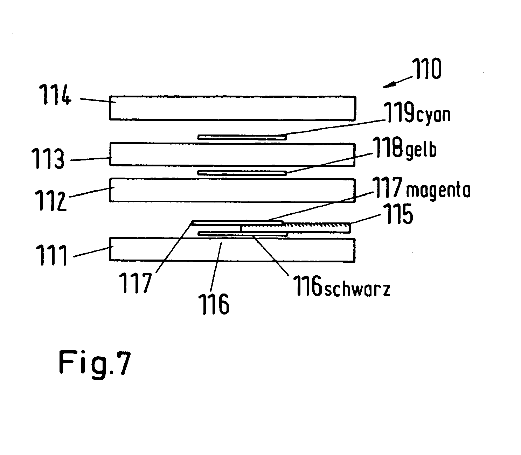

In Fig. 7 ist eine weitere Ausführungsform eines als Polymerschichtverbund ausgebildeten Sicherheitsdokuments 110 schematisch in einer Schnittansicht gezeigt. Der Polymerschichtverbund umfasst transparente Substratschichten 111-114. Auf die unterste Substratschicht 111 wird zunächst ein Druckauszug der ersten personalisierenden und/oder individualisierenden Information, beispielsweise ein schwarzer Druckauszug 116, gedruckt. Anschließend wird hierauf ein diffraktives Sicherheitselement 115 (beispielsweise ein transparentes Kinegram®) angeordnet. Anschließend wird auf das diffraktive Sicherheitselement 115 ein weiter, beispielsweise magentafarbener, Druckauszug 117 der ersten personalisierenden und/oder individualisierenden Information direkt aufgedruckt, so dass das diffraktive Sicherheitselement 115 zumindest teilweise bedruckt ist. Die weiteren Druckauszüge 118 (z. B. gelb) und 119 (z. B. cyan) der ersten personalisierenden und/oder individualisierenden Information werden beispielsweise auf die Substratschichten 112 und 113 gedruckt. Gemeinsam mit einer obersten Substratschicht 114, die als Schutzschicht fungiert, werden die Substratschichten 111-113, wie in Fig. 7 gezeigt ist, zusammengetragen, ausgerichtet und zu dem Polymerschichtverbund mittels einer Lamination in einer Heiz-Kühl-Presse zusammengefügt. Das diffraktive Sicherheitselement 115 ist besser gegen ein unberechtigtes Austauschen und/oder eine Manipulation geschützt.

Bei anderen Ausführungsformen wird das diffraktive Element auf eine der Substratschichtoberflächen aufgebracht, nach dem diese Substratschichtoberfläche mit einem der Druckauszüge bedruckt ist.

Bei wieder einer anderen Ausführungsform wird das diffraktive Element zunächst auf oder in eine Substratschichtoberfläche eingebracht, die anschließend mit einem der mindestens zwei Druckauszüge bedruckt wird. Das diffraktive Element kann beispielsweise mittels einer Heißprägung eingebracht werden.

Ebenso sind Ausführungsformen vorteilhaft, bei denen das diffraktive Element zwischen zwei Substratschichtoberflächen angeordnet wird, die beide jeweils mit einem der mindestens zwei Druckauszüge bedruckt sind.

Bei den beschriebenen Ausführungsformen sind die unterschiedlichen Druckauszuge als Farbauszüge der ersten Information beschrieben. Die erste Information, die beispielsweise auch personalisierende und/oder individualisierende alphanumerische Zeichenketten oder ein Muster, Bild usw. umfassen kann, kann jedoch auch auf andere Weise in Druckauszüge zerlegt werden, so dass die einzelnen Druckauszüge mehrfarbig oder Bunt sind. Rein formal könnten solche Druckauszüge selbstverständlich in mehrere monochrome "Unter-Druckauszüge" zerlegt werden, die dann alle auf dieselbe Substratschichtoberfläche, vorzugsweise in einem Arbeitsvorgang gedruckt werden.

Bei den beschriebenen Ausführungsformen werden die einzelnen Druckauszüge vorzugsweise mittels Tintenstrahldruck aufgebracht.

Bei den Substratschichten handelt es sich vorzugsweise um Polymerschichten auf Polycarbonatbasis. Als Tinte wird vorzugsweise eine flüssige Zubereitung verwendet, die ebenfalls auf Polycarbonatbasis hergestellt ist. Hierdurch lassen sich hochstabile besonders manipulationssichere monolithische Polymerschichtverbünde herstellen.

Im Folgenden werden Beispiele für eine Herstellung eines erfindungsgemäß einsetzbaren Polycarbonatderivats, eine Herstellung einer für die Herstellung einer Tintenstrahldruckfarbe geeigneten flüssigen Zubereitung und Herstellung einer ersten erfindungsgemäß einsetzbaren Tintenstrahldruckfarbe angegeben.

### Beispiel 1: Herstellung eines erfindungsgemäß einsetzbaren Polycarbonatderivats

149,0 g (0,65 Mol) Bisphenol A (2,2-Bis-(4-hydroxyphenyl)-propan, 107,9 g (0,35 Mol) 1,1-Bis-(4-hydroxyphenyl)-3,3,5-trimethylcyclohexan, 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wässrige Phase wird abgetrennt, die organische Phase nach Ansäuern mit Phosphorsäure mit Wasser neutral gewaschen und vom Lösungsmittel befreit.

Das Polycarbonatderivat zeigte eine relative Lösungsviskosität von 1,263. Die Glastemperatur wurde zu 183 °C bestimmt (DSC).

### Beispiel 2: Herstellung einer für die Herstellung einer Tintenstrahldruckfarbe geeigneten flüssigen Zubereitung

Eine flüssige Zubereitung wurde aus 17,5 Gew.-Teile des Polycarbonatderivats aus Beispiel 1 und 82,5 Gew.-Teile eines Lsgm.-Gemisches gemäß Tabelle I hergestellt.

**Tabelle I**

| | |
|---|---|
| Mesitylen | 2,4 |
| 1-Methoxy-2-propanolacetat | 34,95 |
| 1,2,4-Trimethylbenzol | 10,75 |
| Ethyl-3-ethoxypropionat | 33,35 |
| Cumol | 0,105 |
| Solvent Naphtha | 18,45 |

Es wurde eine farblose, hochviskose Lösung mit einer Lösungsviskosität bei Raumtemperatur von 800m Pas erhalten.

### Beispiel 3: Herstellung einer ersten erfindungsgemäß einsetzbaren Tintenstrahldruckfarbe

In einem 50 mL Weithalsgewindeglas wurden 10 g Polycarbonatlösung aus Beispiel 2 und 32,5 g des Lösungsmittelgemisches aus Beispiel 2 mit einem Magnetrührer homogenisiert(4 %-ige PC-Lösung). Es wurde eine farblose, niederviskose Lösung mit einer Lösungsviskosität bei 20 °C von 5,02 mPa.s erhalten.

Die erhaltene Polycarbonat-Lösung wurde zusätzlich mit ca. 2% Pigment Black 28 versetzt. Es ergibt sich eine Tinte, mittels welcher schwarz/weiß Bilder auf Polycarbonatfolien gedruckt werden können. Durch eine äquivalente Zugabe anderer Pigmente oder Farbstoffe lassen sich entsprechend monochrome und/oder farbige Tinten herstellen.

Eine Änderung der Auflösung eines mit der Tinte gedruckte Pixelmusters tritt bei dem Fügevorgang, in dem die mit dem Pixelmuster bedrucke Substratschicht aus

Polycarbonat mit einer darüber angeordneten Substratschicht aus Polycarbonat verbunden wird, nahezu nicht auf. Dieses bedeutet, dass das Pixelmuster auch nach der Lamination in nahezu der gleichen Auflösung erhalten bleibt.

Eine optische Untersuchung des Verbundes ergab ansonsten keinerlei erkennbare Phasengrenze. Der Verbund zeigte sich als monolithischer Block, der auch Delamination hervorragend widersteht.

### Bezugszeichenliste

- 1: Vorrichtung zum Herstellen eines Polymerschichtverbunds
- 2-5: Rollen
- 6-9: Polymerschichten
- 10: Steuereinheit
- 11-14: Druckeinheiten
- 15: Oberseite
- 16: Unterseite
- 17: Umlenkrollen
- 18: Substratschichtenstapel
- 19: Heiß- und Kaltpresse
- 20: Vereinzelungseinheit
- 21: Sicherheits- und/oder Wertdokument
- 22-24: Substratschichten
- 25: obere Substratschichtoberfläche
- 26: untere Substratschichtoberfläche
- 31: erste Information
- 32: Umrisskontur
- 33: Nase
- 34: Mund
- 35: Augen
- 36-39: Druckauszüge
- 40-45: Substrate
- 46: Guillochenlinien
- 47: Sicherheitsdokument
- 51: erste Substratschicht
- 52: Antennenstruktur
- 53: Mikrochip
- 54: erster Druckauszug
- 55-57: Substratschichten
- 58-60: weitere Druckauszüge
- 61: transparenter Bereich
- 62: übriger Flächenbereich
- 63: transparente Substratschicht
- 71: Wert- und/oder Sicherheitsdokument
- 72-80: Substratschichten
- 81: Oberseite
- 82: Unterseite
- 91: Wert- und/oder Sicherheitsdokument
- 92: elektronische Schaltung
- 93-100: Substratschichten
- 101: Substratschichtoberfläche
- 102: Substratschichtoberfläche
- 110: Sicherheitsdokument
- 111-114: Substratschichten
- 115: diffraktives Sicherheitselement
- 116-119: Druckauszüge

## Patentansprüche

1. Verfahren zum Herstellen eines Polymehrschichtverbunds aus mehreren Substratschichten (22-24; 41-45; 72-80; 93-100; 111-114), in dem mindestens eine erste personalisierende und/oder individualisierende Information (31) drucktechnisch gespeichert ist, umfassend die Schritte:
Bereitstellen von mehreren Polymerschichten (6-9) als die Substratschichten (22-24; 41-45; 72-80; 93-100; 111-114);
Drucken der ersten personalisierenden und/oder individualisierenden Informationen (31) auf mindestens eine Substratschicht (22-24; 41-45; 72-80; 93-100; 111-114),
Zusammentragen der Substratschichten (22-24; 41-45; 72-80; 93-100; 111-114) zu einem Substratschichtenstapel (18) und
Laminieren der Substratschichten (22-24; 41-45; 72-80; 93-100; 111-114) zu dem Polymehrschichtverbund,
wobei die erste personalisierende und/oder individualisierende Information (31) in mindestens zwei Druckauszüge (36-39; 116-119) zerlegt wird, die jeweils eine Teilinformation der ersten personalisierenden und/oder individualisierenden Information (31) umfassen, und
das Drucken der ersten personalisierenden und/oder individualisierenden Information (31) erfolgt, indem die mindestens zwei Druckauszüge (36-39; 116-119) auf mindestens zwei unterschiedliche Substratschichtoberflächen (101, 102) abgestimmt gedruckt werden, so dass die gedruckten Druckauszüge (36-39; 116-119) in dem Polymerschichtverbund passergenau übereinander liegen und gemeinsam die erste personalisierende und/oder individualisierende Information wiedergeben, wobei die Substratschichten (22-24; 41-45; 72-80; 93-100; 111-114) so zusammengetragen werden, dass die mit den mindestens zwei Druckauszügen (36-39; 116-119) bedruckten Substratschichtoberflächen (101, 102) innen liegende Oberflächen in dem Substratschichtenstapel (18) sind
**dadurch gekennzeichnet, dass**
die mehren Substratschichten (22-24; 41-45; 72-80; 93-100; 111-114) so zusammengetragen werden, dass mindestens zwei der Substratschichtoberflächen (101, 102), die mit einem der mindestens zwei Druckauszüge (36-39; 116-119) bedruckt sind, in dem Substratstapel (18) unmittelbar aneinander angrenzen.

2. Verfahren nach Anspruch 1, **dadurch gekennzeichnet, dass** die erste personalisierende und/oder individualisierende Information (31) bunt oder mehrfarbig ist oder ausgebildet wird.

3. Verfahren nach Anspruch 1 oder 2, **dadurch gekennzeichnet, dass** die mindestens zwei Druckauszüge (36-39; 116-119) einen monochromen Farbauszug eines n-Farben-Farbsystems oder eines n-Farben-Schwarz-Farbsystems umfassen.

4. Verfahren nach einem der vorangehenden Ansprüche, **dadurch gekennzeichnet, dass** die mindestens zwei Druckauszüge (36-39; 116-119) m monochrome Farbauszüge umfassen, die jeweils auf verschiedene Substratschichtoberflächen (101, 102) gedruckt werden.

5. Verfahren nach einem der vorangehenden Ansprüche, **dadurch gekennzeichnet, dass** zwei der mindestens zwei Druckauszüge (36-39; 116-119) auf gegenüberliegende Oberflächen derselben Substratschicht (22-24; 41-45; 72-80; 93-100; 111-114) passergenau gedruckt werden, wobei die gedruckten Druckauszüge (36-39; 116-119) zueinander bei Betrachtung der Oberflächen spiegelverkehrt sind.

6. Verfahren nach einem der vorangehenden Ansprüche, **dadurch gekennzeichnet, dass** als Polymerschichten (6-9) Polycarbonat-Schichten bereitgestellt werden.

7. Verfahren nach einem der vorangehenden Ansprüche, **dadurch gekennzeichnet, dass** mindestens ein diffraktives Element zumindest teilweise flächig angrenzend an einen der mindestens zwei Druckauszüge (36-39; 116-119) in den Polymerschichtverbund eingebracht wird, wobei das diffraktive Element nach einer Anordnung auf einer der Substratschichtoberflächen zumindest teilweise mit mindestens einem Teil eines der mindestens zwei Drückauszüge (36-39; 116-119) direkt bedruckt wird.

8. Verfahren nach einem der vorangegangenen Ansprüche, **dadurch gekennzeichnet, dass** die mindestens zwei Druckauszüge (36-39; 116-119) mittels eines Digitaldruckverfahrens, nämlich eines Transferdruckverfahrens oder eines Sublimationsdruckverfahrens oder eines Diffusions-Transferverfahrens oder eines Re-Transferverfahrens oder eines Tintenstrahldruckverfahrens gedruckt werden.

9. Verfahren nach einem der vorangehenden Ansprüche, **dadurch gekennzeichnet, dass** als Druckfarben Zubereitungen verwendet werden, die enthalten:
A) 0,1 bis 20 Gew.-% eines Bindemittels mit einem Polycarbonatderivat,
B) 30 bis 99,9 Gew.-% eines vorzugsweise organischen Lösungsmittels oder Lösungsmittelgemischs,
C) 0 bis 10 Gew.-%, bezögen auf Trockenmasse, eines Farbmittels oder Farbmittelgemischs,
D) 0 bis 10 Gew.-% eines funktionales Materials oder einer Mischung funktionaler Materialien,
E) 0 bis 30 Gew.-% Additive und/oder Hilfsstoffe, oder einer Mischung solcher Stoffe,
wobei die Summe der Komponenten A) bis E) stets 100 Gew.-% ergibt.

10. Polymehrschichtverbund, der durch Lamination mehreren Substratschichten (22-24; 41-45; 72-80; 93-100; 111-114) hergestellt ist und in dem mindestens eine erste personalisierende und/oder individualisierende Information (31) drucktechnisch gespeichert ist,
wobei die Substratschichten (22-24; 41-45; 72-80; 93-100; 111-114) Polymerschichten (6-9) sind;
wobei die erste personalisierende und/oder individualisierende Information in mindestens zwei Druckauszüge (36-39; 116-119) zerlegt ist, die jeweils eine Teilinformation (31) der ersten personalisierenden und/oder individualisierenden Information umfassen, und
die mindestens zwei Druckauszüge (36-39; 116-119) in mindestens zwei voneinander beabstandeten Ebenen so gedruckt sind bzw. die mindestens zwei gedruckten Druckauszüge in mindestens zwei voneinander beabstandeten Ebenen so angeordnet sind, dass die gedruckten Druckauszüge (36-39; 116-119) in dem Polymerschichtverbund passergenau übereinander liegen und gemeinsam die erste personalisierende und/oder individualisierende Information (31) wiedergeben, wobei die Ebenen, die mit den mindestens zwei Druckauszügen (36-39; 116-119) bedruckt sind bzw. in denen die mindestens zwei Druckauszüge (36-39; 116-119) angeordnet sind, innen liegende Ebenen sind,
**dadurch gekennzeichnet,**
**dass** mindestens zwei der mindestens zwei Druckauszüge (36-39; 116-119) auf Substratschichtoberflächen unterschiedlicher Substratschichten (22-24; 41-45; 72-80; 93-100; 111-114) gedruckt sind und diese bedruckten Substratschichtoberflächen aneinander angrenzend aufeinander laminiert sind.

11. Polymehrschichtverbund nach Anspruch 10, **dadurch gekennzeichnet, dass** zwei der mindestens zwei Druckauszüge (36-39; 116-119) auf gegenüberliegende Oberflächen derselben Substratschicht (22-24; 41-45; 72-80; 93-100; 111-114) passergenau gedruckt sind, wobei die gedruckten Druckauszüge (36-39; 116-119) zueinander bei Betrachtung der Oberflächen spiegelverkehrt sind.

12. Polymehrschichtverbund nach Anspruch 10 oder 11, **dadurch gekennzeichnet, dass** die Polymerschichten (6-9) alle, zumindest in einem Bereich, in dem eine der Substratschichtoberflächen mit einem der Druckauszüge (36-39; 116-119) bedruckt ist, oder zumindest in einem Bereich, in dem eine der in dem Polymerschichtverbund darüber oder darunter angeordneten Substratschichten mit einem der Druckauszüge (36-39; 116-119) bedruckt ist, transparent und/oder transluzent sind, wobei zumindest eine oder genau eine, Polymerschicht, die zwischen zwei der mindestens zwei Druckauszüge angeordnet ist, transluzent ist.

13. Polymehrschichtverbund nach einem der Ansprüche 10 bis 12, **dadurch gekennzeichnet, dass** ein oder mehrere aus nicht polymerischen Werkstoffen, insbesondere Papier, bestehende weitere Substratschichten vorhanden sind, die nicht zerstörungsfrei von angrenzenden Substratschichten und/oder weiteren angrenzenden Substratschichten gelöst werden kann oder können.

14. Polymehrschichtverbund nach einem der Ansprüche 10 bis 13, **dadurch gekennzeichnet, dass** innen liegend eine Inlayschicht angeordnet ist auf der oder in eine oder mehrere Aussparungen eine oder mehrere elektronische Schaltungen (92) und/oder ein Mikrochip (53) aufgebracht oder eingebracht sind und eine der mindestens zwei Druckauszüge (36-39; 116-119) auf die eine oder die mehreren elektronische Schaltungen (92) und/oder den Mikrochip (53) aufgedruckt ist.

15. Polymehrschichtverbund nach einem der Ansprüche 10 bis 14, **dadurch gekennzeichnet, dass** eine zweite personalisierende und/oder individualisierende Information (31) in mehrere weitere Druckauszüge zerlegt ist und die mehreren weiteren Druckauszüge in mehreren voneinander beabstandeten Ebenen so gedruckt oder angeordnet sind, dass die personalisierenden und/oder individualisierenden Informationen auf einer Oberseite des Polymerverbunds wiedergegeben werden und die weiteren Druckauszüge in dem Polymerverbund passergenau übereinander liegen und gemeinsam die zweiten personalisierenden und/oder individualisierenden Informationen auf einer zu der Oberseite gegenüberliegenden Unterseite des Polymerverbunds wiedergegeben.

## Claims

1. Method for producing a multilayer polymer structure composed of a plurality of substrate layers (22-24; 41-45; 72-80; 93-100; 111-114), in which at least a first personalizing and/or individualizing information (31) is stored by means of printing technology, comprising the steps of:
making available a plurality of polymer layers (6-9) as the substrate layers (22-24; 41-45; 72-80; 93-100; 111-114);
printing the first personalizing and/or individualizing information (31) onto at least one substrate layer (22-24; 41-45; 72-80; 93-100; 111-114);
collating the substrate layers (22-24; 41-45; 72-80; 93-100; 111-114) to give a substrate layer stack (18) and
laminating the substrate layers (22-24; 41-45; 72-80; 93-100; 111-114) to give the multilayer polymer structure,
the first personalizing and/or individualizing information (31) being split into at least two print extracts (36-39; 116-119) which each comprise partial information of the first personalizing and/or individualizing information (31), and
the printing of the first personalizing and/or individualizing information (31) takes place in that the at least two print extracts (36-39; 116-119) are printed onto at least two different substrate layer surfaces (101, 102) so as to match, so that the printed print extracts (36-39; 116-119) lie in register one on top of the other in the multilayer polymer structure and together reproduce the first personalizing and/or individualizing information, wherein the substrate layers (22-24; 41-45; 72-80; 93-100; 111-114) are collated in such a manner that the substrate layer surfaces (101, 102) imprinted with the at least two print extracts (36-39; 116-119) are inner surfaces in the substrate layer stack (18),
**characterised in that**
the plurality of substrate layers (22-24; 41-45; 72-80; 93-100; 111-114) are collated in such a manner that at least two of the substrate layer surfaces (101, 102) which are imprinted with one of the at least two print extracts (36-39; 116-119) are directly adjacent to one another in the substrate stack (18).

2. Method according to claim 1, **characterised in that** the first personalizing and/or individualizing information (31) is or is designed to be colourful or multi-coloured.

3. Method according to claim 1 or 2, **characterised in that** the at least two print extracts (36-39; 116-119) comprise a monochrome colour separation of an n-colour colour system or of an n-colour black/colour system.

4. Method according to any one of the preceding claims, **characterised in that** the at least two print extracts (36-39; 116-119) comprise m monochrome colour separations which are each printed on different substrate layer surfaces (101, 102).

5. Method according to any one of the preceding claims, **characterised in that** two of the at least two print extracts (36-39; 116-119) are printed in register on opposite surfaces of the same substrate layer (22-24; 41-45; 72-80; 93-100; 111-114), wherein the printed print extracts (36-39; 116-119) are mirror-inverted with respect to each other when looking at the surfaces.

6. Method according to any one of the preceding claims, **characterised in that** polycarbonate layers are provided as the polymer layers (6-9).

7. Method according to any one of the preceding claims, **characterised in that** at least one diffractive element is incorporated in the multilayer polymer structure in a manner at least partially flatly adjacent to one of the at least two print extracts (36-39; 116-119), wherein the diffractive element, after being arranged on one of the substrate layer surfaces, is directly imprinted at least partially with at least a portion of one of the at least two print extracts (36-39; 116-119).

8. Method according to any one of the preceding claims, **characterised in that** the at least two print extracts (36-39; 116-119) are printed by means of a digital printing process, namely a transfer printing process or a sublimation printing process or a diffusion transfer process or a retransfer process or an inkjet printing process.

9. Method according to any one of the preceding claims, **characterised in that** the printing inks used are preparations which contain:
A) 0.1 to 20% by weight of a binder containing a polycarbonate derivative,
B) 30 to 99.9% by weight of a preferably organic solvent or solvent mixture,
C) 0 to 10% by weight, based on dry mass, of a dye or dye mixture,
D) 0 to 10% by weight of a functional material or a mixture of functional materials,
E) 0 to 30% by weight of additives and/or auxiliaries, or of a mixture of such substances,
the sum of components A) to E) always being 100% by weight.

10. Multilayer polymer structure which is produced by laminating a plurality of substrate layers (22-24; 41-45; 72-80; 93-100; 111-114) and in which at least a first personalizing and/or individualizing information (31) is stored by means of printing technology,
wherein the substrate layers (22-24; 41-45; 72-80; 93-100; 111-114) are polymer layers (6-9);
wherein the first personalizing and/or individualizing information is split into at least two print extracts (36-39; 116-119) which each comprise partial information (31) of the first personalizing and/or individualizing information, and
the at least two print extracts (36-39; 116-119) are printed in at least two spaced-apart planes in such a way, or the at least two printed print extracts are arranged in at least two spaced-apart planes in such a way, that the printed print extracts (36-39; 116-119) lie in register one on top of the other in the multilayer polymer structure and together reproduce the first personalizing and/or individualizing information (31), wherein the planes which are imprinted with the at least two print extracts (36-39; 116-119) or in which the at least two print extracts (36-39; 116-119) are arranged are inner planes,
**characterised in that**
at least two of the at least two print extracts (36-39; 116-119) are printed on substrate layer surfaces of different substrate layers (22-24; 41-45; 72-80; 93-100; 111-114) and these imprinted substrate layer surfaces are laminated onto one another in a directly adjacent manner.

11. Multilayer polymer structure according to claim 10, **characterised in that** two of the at least two print extracts (36-39; 116-119) are printed in register on opposite surfaces of the same substrate layer (22-24; 41-45; 72-80; 93-100; 111-114), wherein the printed print extracts (36-39, 116-119) are mirror-inverted with respect to each other when looking at the surfaces.

12. Multilayer polymer structure according to claim 10 or 11, **characterised in that** the polymer layers (6-9) are all transparent and/or translucent at least in a region in which one of the substrate layer surfaces is imprinted with one of the print extracts (36-39; 116-119) or at least in a region in which one of the substrate layers arranged thereabove or therebelow in the multilayer polymer structure is imprinted with one of the print extracts (36-39; 116-119), wherein at least one or precisely one polymer layer which is arranged between two of the at least two print extracts is translucent.

13. Multilayer polymer structure according to any one of claims 10 to 12, **characterised in that** there are one or more further substrate layers which are made from non-polymeric materials, particularly paper, and which cannot be detached from adjacent substrate layers and/or further adjacent substrate layers without being destroyed.

14. Multilayer polymer structure according to any one of claims 10 to 13, **characterised in that** an inlay layer is arranged internally, one or more electronic circuits (92) and/or a microchip (53) being applied thereto or incorporated in one or more recesses thereon, and one of the at least two print extracts (36-39; 116-119) is printed onto the one or more electronic circuits (92) and/or the microchip (53).

15. Multilayer polymer structure according to any one of claims 10 to 14, **characterised in that** a second personalizing and/or individualizing information (31) is split into a plurality of further print extracts and the plurality of further print extracts are printed or arranged in a plurality of spaced-apart planes so that the personalizing and/or individualizing information can be reproduced on a top side of the polymer structure and the further print extracts lie in register one on top of the other in the polymer structure and together reproduce the second personalizing and/or individualizing information on a bottom side of the polymer structure, said bottom side being located opposite the top side.

## Revendications

1. Procédé de fabrication d'un composite de polymère stratifié à partir de plusieurs couches de substrat (22 à 24 ; 41 à 45 ; 72 à 80 ; 93 à 100 ; 111 à 114) dans lequel au moins une première information de personnalisation et/ou d'individualisation (31) est enregistrée par une technique d'impression, comprenant les étapes de :
mise à disposition de plusieurs couches de polymère (6 à 9) comme couches de substrat (22 à 24 ; 41 à 45 ; 72 à 80 ; 93 à 100 ;111 à 114) ;
impression des premières informations de personnalisation et/ou d'individualisation (31) sur au moins une couche de substrat (22 à 24 ; 41 à 45 ; 72 à 80 ; 93 à 100 ;111 à 114),
application conjointe des couches de substrats (22 à 24 ; 41 à 45 ; 72 à 80 ; 93 à 100 ; 111 à 114) en un empilement de couches de substrat (18) et
stratification des couches de substrat (22 à 24 ; 41 à 45 ; 72 à 80 ; 93 à 100 ; 111 à 114), en un composite de polymère stratifié,
dans lequel la première information de personnalisation et/ou d'individualisation (31) est dissociée en au moins deux épreuves d'impression (36 à 39 ; 116 à 119) qui comprennent respectivement une information partielle de la première information de personnalisation et/ou d'individualisation (31), et l'impression de la première information de personnalisation et/ou d'individualisation (31) s'effectue en imprimant de conserve les au moins deux épreuves d'impression (36 à 39 ; 116 à 119) sur au moins deux surfaces de couches de substrat différentes (101, 102) de sorte que les épreuves d'impression imprimées (36 à 39 ; 116 à 119) dans le composite de polymère stratifié se superposent exactement et restituent ensemble la première information de personnalisation et/ou d'individualisation, dans lequel les couches de substrat (22 à 24; 41 à 45; 72 à 80; 93 à 100; 111 à 114) sont appliquées conjointement de telle sorte que les surfaces de couches de substrat (101, 102) imprimées avec les au moins deux épreuves d'impression (36 à 39 ; 116 à 119) soient des surfaces se trouvant à l'intérieur dans l'empilement des couches de substrat (18),
**caractérisé en ce que**
les multiples couches de substrat (22 à 24 ; 41 à 45 ; 72 à 80 ; 93 à 100 ; 111 à 114) sont appliquées conjointement de telle sorte qu'au moins deux des surfaces de couches de substrat (101, 102) qui sont imprimées avec l'une des au moins deux épreuves d'impression (36 à 39 ; 116 à 119) soient immédiatement adjacentes dans l'empilement de substrat (18).

2. Procédé selon la revendication 1, **caractérisé en ce que** la première information de personnalisation et/ou d'individualisation (31) est ou est constituée de façon colorée ou multicolore.

3. Procédé selon la revendication 1 ou 2, **caractérisé en ce que** les aux moins deux épreuves d'impression (36 à 39 ; 116 à 119) comprennent une épreuve couleur monochrome d'un système d'encrage à n couleurs ou d'un système d'encrage noir à n couleurs.

4. Procédé selon l'une des revendications précédentes, **caractérisé en ce que** les au moins deux épreuves d'impression (36 à 39 ; 116 à 119) comprennent m épreuves couleur monochromes qui sont imprimées respectivement sur différentes surfaces de couches de substrat (101, 102).

5. Procédé selon l'une des revendications précédentes, **caractérisé en ce que** deux des au moins deux épreuves d'impression (36 à 39 ; 116 à 119) sont imprimées exactement sur des surfaces opposées de la même couche de substrat (22 à 24 ; 41 à 45 ; 72 à 80 ; 93 à 100 ; 111 à 114), dans lequel les épreuves d'impression imprimées (36 à 39 ; 116 à 119) sont inversées l'une par rapport à l'autre lorsque l'on regarde les surfaces.

6. Procédé selon l'une des revendications précédentes, **caractérisé en ce que** des couches de polycarbonate sont mises à disposition comme couches de polymère (6 à 9).

7. Procédé selon l'une des revendications précédentes, **caractérisé en ce qu'**au moins un élément de diffraction est intégré au moins partiellement de façon adjacente sur toute la surface sur l'une des au moins deux épreuves d'impression (36 à 39 ; 116 à 119) dans le composite de polymère stratifié, dans lequel l'élément de diffraction est imprimé directement selon une disposition sur l'une des surfaces de couches de substrat au moins partiellement avec au moins une partie de l'une des au moins deux épreuves d'impression (36 à 39 ;116 à 119).

8. Procédé selon l'une des revendications précédentes, **caractérisé en ce que** les aux moins deux épreuves d'impression (36 à 39 ; 116 à 119) sont imprimées au moyen d'un procédé d'impression numérique, à savoir d'un procédé d'impression par transfert ou d'un procédé d'impression par sublimation ou d'un procédé de diffusion-transfert ou d'un procédé de re-transfert ou d'un procédé d'impression à jet d'encre.

9. Procédé selon l'une des revendications précédentes, **caractérisé en ce que** l'on utilise comme préparations, des encres d'impression qui comprennent :
A) 0,1 à 20 % en poids d'un liant avec un dérivé de polycarbonate,
B) 30 à 99,9 % en poids d'un solvant ou d'un mélange de solvants de préférence organiques ;
C) 0 à 10 % en poids par rapport au poids sec d'un colorant ou d'un mélange de colorants,
D) 0 à 10 % en poids d'un matériau fonctionnel ou d'un mélange de matériaux fonctionnels,
E) 0 à 30 % en poids d'additifs et/ou d'adjuvants ou d'un mélange de ces substances, dans lequel la somme des composants A) à E) donne toujours 100 % en poids.

10. Composite de polymère stratifié qui est produit par stratification de plusieurs couches de substrat (22 à 24 ; 41 à 45 ; 72 à 80 ; 93 à 100 ; 111 à 114), et dans lequel au moins une première information de personnalisation et/ou d'individualisation (31) est enregistrée par une technique d'impression,
dans lequel les couches de substrat (22 à 24 ; 41 à 45 ; 72 à 80 ; 93 à 100 ; 111 à 114) sont des couches de polymère ;
dans lequel la première information de personnalisation et/ou d'individualisation est dissociée en au moins deux épreuves d'impression (36 à 39 ; 116 à 119) qui comprennent respectivement une information partielle (31) de la première information de personnalisation et/ou d'individualisation et les au moins deux épreuves d'impression (36 à 39 ; 116 à 119) sont imprimées dans au moins deux plans distants l'un de l'autre de telle sorte que les au moins deux épreuves d'impression soient disposées dans au moins deux plans distants l'un de l'autre de telle sorte que les épreuves d'impression imprimées (36 à 39 ; 116 à 119) soient superposées exactement dans le composite de polymère stratifié et restituent conjointement la première information de personnalisation et/ou d'individualisation (31), dans lequel les plans qui sont imprimés avec les au moins deux épreuves d'impression (36 à 39 ; 116 à 119) ou dans lesquels les au moins deux épreuves d'impression (36 à 39 ; 116 à 119) sont disposées sont des plans se trouvant à l'intérieur,
**caractérisé en ce que**
les au moins deux épreuves d'impression (36 à 39 ; 116 à 119) sont imprimées sur des surfaces de couches de substrat de différentes couches de substrat (22 à 24 ; 41 à 45 ; 72 à 80 ; 93 à 100 ; 111 à 114) et ces surfaces de couches de substrat imprimées sont stratifiées l'une sur l'autre de façon adjacente.

11. Composite de polymère stratifié selon la revendication 10, **caractérisé en ce que** deux des au moins deux épreuves d'impression (36 à 39 ; 116 à 119) sont imprimées exactement sur des surfaces opposées de la même couche de substrat (22 à 24 ; 41 à 45 ; 72 à 80 ; 93 à 100 ; 111 à 114), dans lequel les épreuves d'impression imprimées (36 à 39 ; 116 à 119) sont inversées l'une par rapport à l'autre lorsque l'on regarde les surfaces.

12. Composite de polymère stratifié selon la revendication 10 ou 11, **caractérisé en ce que** les couches de polymères (6 à 9), au moins dans une zone dans laquelle l'une des surfaces de la couche de substrat est imprimée avec l'une des épreuves d'impression (36 à 39 ; 116 à 119) ou au moins dans une zone dans laquelle l'une des couches de substrat disposée au dessus ou au dessous dans le composite de polymère stratifié est imprimée avec l'une de épreuves d'impression (36 à 39 ; 116 à 119) sont toutes transparentes et/ou translucides, dans lequel au moins une ou exactement une couche de polymère qui est disposée entre deux des au moins deux épreuves d'impression est translucide.

13. Composite de polymère stratifié selon l'une des revendications 10 à 12, **caractérisé en ce qu'**une ou plusieurs autres couches de substrat constituées de matériaux non polymères, en particulier de papier sont présentes, qui ne peut ou ne peuvent pas être désolidarisée(s) sans destruction de couches de substrat adjacentes et/ou d'autres couches de substrat adjacentes.

14. Composite de polymère stratifié selon l'une des revendications 10 à 13, **caractérisé en ce qu'**à l'intérieur est disposée une couche d'inlay, sur laquelle ou dans un ou plusieurs évidements, un ou plusieurs circuits électroniques (92) et/ou une micro-puce (53) sont appliqué(e)s ou inséré(e)s et l'une des au moins deux épreuves d'impression (36 à 39 ; 116 à 119) est imprimée sur l'un ou les multiples circuits électroniques (90) et/ou la micro-puce (53).

15. Composite de polymère stratifié selon l'une des revendications 10 à 14, **caractérisé en ce qu'**une deuxième information de personnalisation et/ou d'individualisation (31) est dissociée en plusieurs autres épreuves d'impression et les plusieurs autres épreuves d'impression sont imprimées ou disposées dans plusieurs plans distants les uns des autres de telle sorte que les informations de personnalisation et/ou d'individualisation soient restituées sur un côté supérieur du composite de polymère et les autres épreuves d'impression dans le composite de polymère se superposent exactement et conjointement, les deuxièmes informations de personnalisation et/ou d'individualisation soient restituées sur un côté inférieur du composite de polymère opposé au côté supérieur.
